(19) Europäisches Patentamt / European Patent Office / Office européen des brevets

(11) **EP 4 787 985 A1**

(12) **EUROPEAN PATENT APPLICATION**
published in accordance with Art. 153(4) EPC

(43) Date of publication:
**05.08.2026  Bulletin 2026/32**

(21) Application number: **24880901.4**

(22) Date of filing: **27.02.2024**

(51) International Patent Classification (IPC):
*H04W 56/00* (2009.01)

(52) Cooperative Patent Classification (CPC):
Y02D 30/70

(86) International application number:
**PCT/CN2024/078641**

(87) International publication number:
**WO 2025/086514 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023  CN 202311392326**

(71) Applicant: **Shenzhen Inovance Technology Co., Ltd.**
**Shenzhen, Guangdong 518000 (CN)**

(72) Inventors:
• **SHI, Hui**
**Shenzhen, Guangdong 518000 (CN)**

• **XIE, Yitong**
**Shenzhen, Guangdong 518000 (CN)**
• **LIU, Qi**
**Shenzhen, Guangdong 518000 (CN)**
• **LIN, Zhinan**
**Shenzhen, Guangdong 518000 (CN)**
• **ZHU, Zhijun**
**Shenzhen, Guangdong 518000 (CN)**
• **LIU, Lifa**
**Shenzhen, Guangdong 518000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **SIGNAL PROCESSING METHOD, SYSTEM, MANAGEMENT STATION, TRANSMITTING END, AND STORAGE MEDIUM**

(57)  The present application discloses a signal processing method, a system, a management station, a transmitting end and a storage medium. The method includes: receiving uplink synchronization signals sent by each of transmitting ends, and determining a received frequency-domain sequence based on the uplink synchronization signals; determining a preamble sequence corresponding to each of the transmitting ends; determining a detection result based on the preamble sequence and the received frequency-domain sequence, and determining whether the received frequency-domain sequence requires interference cancellation processing based on the detection result; and in response to that the received frequency-domain sequence requires the interference cancellation processing based on the detection result, performing the interference cancellation processing on the received frequency-domain sequence. The present application meets the performance requirements of more user access synchronization, lower latency, higher reliability and multi-access under the same time-frequency resource in industrial scenarios.

EP 4 787 985 A1

S110

receiving uplink synchronization signals sent by each of transmitting ends, and determining a received frequency-domain sequence based on the uplink synchronization signals

S120

determining a preamble sequence corresponding to each of the transmitting ends

S130

determining a detection result based on the preamble sequence and the received frequency-domain sequence, and determining whether the received frequency-domain sequence requires interference cancellation processing based on the detection result

S140

in response to that the received frequency-domain sequence requires the interference cancellation processing based on the detection result, performing the interference cancellation processing on the received frequency-domain sequence

FIG. 1

**Description**

**CROSS-REFERENCE TO RELATED APPLICATIONS**

The present application claims priority to the Chinese Patent Application No. 202311392326.9, filed on October 25, 2023, the entire contents of which are incorporated herein by reference.

**TECHNICAL FIELD**

The present application relates to the technical field of industrial networks, and in particular to a signal processing method, a system, a management station, a transmitting end and a storage medium.

**BACKGROUND**

With the rapid development of industrial digitalization, the demand in industrial scenarios has gradually increased, and wireless communication has gradually been regarded as one of the key technologies for industrial digital transformation. However, the requirements of users in industrial scenarios for lower latency, higher reliability and multi-access performance also force industrial wireless networks to face higher challenges. Uplink synchronization is the first and indispensable step for users to perform wireless transmission.

At present, uplink synchronization of mainstream wireless communication networks is mainly divided into two streams: wireless local area networks and mobile communication Long Term Evolution (LTE) and 5G New Radio (NR) systems led by the 3rd Generation Partnership Project (3GPP). Although these two mainstream wireless communication technologies perform well in their respective application scenarios, they still have considerable disadvantages in the evolving industrial wireless communication scenarios. The main manifestations are as follows:

The essential feature of the wireless local area networks is to implement multi-user frame synchronization based on the carrier sense mechanism with collision avoidance. The defect of this method is that all users need to compete for media access resources, which greatly reduces the multi-user synchronization performance and brings a huge negative impact on the low latency and high reliability performance in industrial networks. At the same time, the synchronization method based on the repetition characteristic of the received sequence in the wireless local area networks leads to a limited service range for users in industrial wireless communications, making it no longer suitable for industrial wireless communication scenarios.

Although both LTE and 5G NR systems are centralized scheduling systems and have specially designed multiple random access preambles to assist in completing multi-user access synchronization, when implementing simultaneous synchronization of more users, on the one hand, 5G NR adopts multiple conflict resolution mechanisms, including conflict resolution in the random access process, conflict resolution in resource allocation schemes, NOMA technology, dynamic spectrum sharing and coordination, etc., to ensure reasonable resource allocation and efficient data transmission. The conflict resolution mechanism causes more latency problems when multiple users access. On the other hand, preamble interference between multiple users leads to a sharp drop in synchronization performance. Such extremely low reliability makes it no longer suitable for industrial wireless communication scenarios with higher requirements.

**SUMMARY**

Embodiments of the present application provide a signal processing method, a system, a management station, a transmitting end and a storage medium, aiming to meet the performance requirements of more user access synchronization, lower latency, higher reliability and multi-access under the same time-frequency resource in industrial scenarios.

An embodiment of the present application provides a multi-user uplink synchronization signal processing method, applied to a management station. The multi-user uplink synchronization signal processing method includes:

receiving uplink synchronization signals sent by each of transmitting ends, and determining a received frequency-domain sequence based on the uplink synchronization signals;

determining a preamble sequence corresponding to each of the transmitting ends;

determining a detection result based on the preamble sequence and the received frequency-domain sequence, and determining whether the received frequency-domain sequence requires interference cancellation processing based on the detection result; and

in response to that the received frequency-domain sequence requires the interference cancellation processing based on the detection result, performing the interference cancellation processing on the received frequency-domain sequence.

In an embodiment, the determining the detection result based on the preamble sequence and the received frequency-domain sequence, and determining whether the received frequency-domain sequence requires the interference cancellation processing based on the detection result includes:

performing frequency-domain carrier mapping on the preamble sequence corresponding to each of the transmitting ends based on a frequency-domain carrier mapping type to obtain a valid preamble sequence set, determining the detection result based on the valid preamble sequence set and the received frequency-domain sequence, and determining whether the received frequency-domain sequence requires the interference cancellation processing based on the detection result, where the frequency-domain carrier mapping type includes a zero-padding mode or a non-zero-padding mode; or

performing frequency-domain carrier demapping on the received frequency-domain sequence to obtain a received frequency-domain sequence after the frequency-domain carrier is demapped, determining a detection result based on the preamble sequence corresponding to each of the transmitting ends and the received frequency-domain sequence after the frequency-domain carrier is demapped, and determining whether the received frequency-domain sequence after the frequency-domain carrier is demapped requires the interference cancellation processing based on the detection result.

In an embodiment, the performing the threshold detection based on the signal peak value and the noise power to obtain the detection result includes:

determining a detection threshold based on the noise power and a threshold constant;

in response to that the signal peak value is greater than the detection threshold, determining that the transmitting end is a first-detected transmitting end; and

in response to that the first-detected transmitting end meets a preset condition, determining that the detection result is that the first-detected transmitting end is a legitimate transmitting end; and

the determining whether the received frequency-domain sequence requires the interference cancellation processing based on the detection result includes:
in response to that the detection result is that the first-detected transmitting end is the legitimate transmitting end, determining whether the received frequency-domain sequence requires the interference cancellation processing based on a current total number of transmitting ends.

In an embodiment, the preset condition includes:

a signal-to-noise ratio corresponding to the first-detected transmitting end is greater than a preset signal-to-noise ratio; or

timing advance information corresponding to the first-detected transmitting end is less than a preset timing advance information threshold.

In an embodiment, the performing the interference cancellation processing on the received frequency-domain sequence includes:

acquiring a unique identifier corresponding to the legitimate transmitting end;

determining a valid preamble sequence corresponding to the legitimate transmitting end based on the unique identifier;

acquiring a valid path channel coefficient and timing advance information corresponding to the legitimate transmitting end;

reconstructing the valid preamble sequence corresponding to the legitimate transmitting end based on the valid path channel coefficient and the timing advance information to obtain a reconstructed valid preamble sequence; and

performing interference cancellation on the received frequency-domain sequence through the reconstructed valid preamble sequence.

In an embodiment, the acquiring the valid path channel coefficient corresponding to the legitimate transmitting end includes:

acquiring a time-domain auto-correlation peak value of the valid preamble sequence corresponding to the legitimate transmitting end, and a time-domain cross-correlation value between the valid preamble sequence corresponding to the legitimate transmitting end and the received frequency-domain sequence; and

determining the valid path channel coefficient corresponding to the legitimate transmitting end based on the time-domain auto-correlation peak value and the time-domain cross-correlation value.

In an embodiment, the determining the detection result based on the preamble sequence corresponding to each of the transmitting ends and the received frequency-domain sequence after the frequency-domain carrier is demapped includes:

determining an energy signal set based on the preamble sequence corresponding to each of the transmitting ends and the received frequency-domain sequence after the frequency-domain carrier is demapped;

performing time-domain merging on the energy signal set to obtain a merged energy signal set;

acquiring a signal peak value and a noise power in the merged energy signal set; and

performing threshold detection based on the signal peak value and the noise power to obtain the detection result.

In an embodiment, the determining the energy signal set based on the preamble sequence corresponding to each of the transmitting ends and the received frequency-domain sequence after the frequency-domain carrier is demapped includes:

performing conjugate multiplication on the preamble sequence corresponding to each of the transmitting ends and the received frequency-domain sequence after the frequency-domain carrier is demapped to obtain a frequency-domain signal sequence;

performing an inverse Fourier transform on the frequency-domain signal sequence to obtain a time-domain signal sequence; and

calculating a square value after taking an absolute value of the time-domain signal sequence to obtain the energy signal set.

In an embodiment, the performing the time-domain merging on the energy signal set to obtain the merged energy signal set includes:

summing energy signals of each of antennas in the energy signal set to obtain an antenna merged energy signal set, or summing energy signals meeting a merging condition in the energy signal set to obtain an antenna merged energy signal set;

dividing the antenna merged energy signal set into energy signal sets with equal-length; and

summing corresponding energy signals in the energy signal sets with equal-length to obtain the merged energy signal set.

In an embodiment, the merging condition includes that the signal-to-noise ratio is greater than a preset signal-to-noise ratio, or the energy signal set has a signal peak value.
In an embodiment, the acquiring the signal peak value and the noise power in the merged energy signal set includes:

determining a signal peak value in the merged energy signal set;

acquiring residual energy signals in the merged energy signal set except the signal peak value and a preset number of signal points adjacent to the signal peak value; and

calculating an average signal energy based on each of the residual energy signals, and taking the average signal energy as the noise power.

In an embodiment, the multi-user uplink synchronization signal processing method further includes: after completing synchronization of uplink synchronization signals of all transmitting ends, outputting a synchronization information report.

In an embodiment, the determining the preamble sequence corresponding to each of the transmitting ends includes:

determining a specific parameter set corresponding to each of the transmitting ends; and

generating a preamble sequence corresponding to each of the transmitting ends based on the specific parameter set.

In an embodiment, the determining the specific parameter set corresponding to each of the transmitting ends includes:

determining the specific parameter set corresponding to each of the transmitting ends based on a preamble sequence index corresponding to each of the transmitting ends and a mapping relationship between the preamble sequence index of each of the transmitting ends and the specific parameter set, where the preamble sequence index corresponding to each of the transmitting ends is pre-configured by the management station; or

configuring the specific parameter set corresponding to each of the transmitting ends through the management station.

In an embodiment, the specific parameter set includes a complete feature set for generating a preamble sequence, and the generating the preamble sequence corresponding to each of the transmitting ends based on the specific parameter set includes:
generating the preamble sequence corresponding to each of the transmitting ends based on the complete feature set corresponding to each of the transmitting ends.

In an embodiment, the determining the received frequency-domain sequence based on the uplink synchronization signal includes:

determining a cyclic prefix and a guard period corresponding to each of the transmitting ends;

performing cyclic prefix removal processing on the uplink synchronization signal based on the cyclic prefix, and performing guard period removal processing on the uplink synchronization signal based on the guard period, to obtain a processed uplink synchronization signal corresponding to each of the transmitting ends; and

performing a fast Fourier transform on the uplink synchronization signal to obtain the received frequency-domain sequence.

In addition, an embodiment of the present application provides a multi-user uplink synchronization signal processing method, applied to a transmitting end. The multi-user uplink synchronization signal processing method includes:

determining a preamble sequence corresponding to the transmitting end;

determining a valid preamble sequence corresponding to the transmitting end based on the preamble sequence and a frequency-domain carrier mapping type corresponding to the transmitting end;

generating an uplink synchronization signal corresponding to the transmitting end based on the valid preamble sequence; and

sending the uplink synchronization signal to a management station.

In an embodiment, the determining the preamble sequence corresponding to the transmitting end includes:

receiving a preamble sequence index sent by the management station, and determining a specific parameter set based on the preamble sequence index; and

generating a preamble sequence corresponding to the transmitting end based on the specific parameter set.

In an embodiment, the receiving the preamble sequence index sent by the management station and determining the specific parameter set based on the preamble sequence index includes:

in response to detecting a start signal of the transmitting end, receiving the preamble sequence index sent by the management station; and
determining the specific parameter set corresponding to the transmitting end based on the preamble sequence index and a mapping relationship between the preamble sequence index and the specific parameter set.

In an embodiment, the specific parameter set includes a complete feature set for generating a preamble sequence, and the generating the preamble sequence corresponding to the transmitting end based on the specific parameter set includes:
generating the preamble sequence corresponding to each of the transmitting ends based on the complete feature set corresponding to each of the transmitting ends.

In an embodiment, different frequency-domain carrier mapping types correspond to different zero-padding quantities, and the zero-padding quantity increases as a number of transmitting ends accessed by the management station increases.

In an embodiment, the generating the uplink synchronization signal corresponding to the transmitting end based on the valid preamble sequence includes:

performing an inverse fast Fourier transform on the valid preamble sequence to obtain a time-domain sequence;

performing cyclic shifting on the time-domain sequence to obtain a cyclically shifted time-domain sequence; and

adding a cyclic prefix and a guard period to the cyclically shifted time-domain sequence to obtain the uplink synchronization signal corresponding to the transmitting end.

In addition, to achieve the above objective, the present application further provides a multi-user uplink synchronization signal processing system, including:

a received frequency-domain sequence determination module, configured to receive uplink synchronization signals sent by each of the transmitting ends, and determine a received frequency-domain sequence based on the uplink synchronization signals;

a preamble sequence determination module, configured to determine a preamble sequence corresponding to each of the transmitting ends;

an interference cancellation processing determination module, configured to determine a detection result based on the preamble sequence and the received frequency-domain sequence, and determine whether the received frequency-domain sequence requires interference cancellation processing based on the detection result; and

an interference cancellation module, configured to perform the interference cancellation processing on the received frequency-domain sequence in response to that the received frequency-domain sequence requires the interference cancellation processing based on the detection result; or

the multi-user uplink synchronization signal processing system includes:

a preamble sequence determination module, configured to determine a preamble sequence corresponding to a transmitting end;

a valid preamble sequence determination module, configured to determine a valid preamble sequence corresponding to the transmitting end based on the preamble sequence and a frequency-domain carrier mapping type corresponding to the transmitting end;

an uplink synchronization signal generation module, configured to generate an uplink synchronization signal corresponding to the transmitting end based on the valid preamble sequence; and

a transmitting module, configured to transmit the uplink synchronization signal.

In addition, to achieve the above objective, the present application further provides a multi-user uplink synchronization signal processing device, including: a memory, a processor, and a multi-user uplink synchronization signal processing program stored on the memory and operable on the processor, where the multi-user uplink synchronization signal processing program, when executed by the processor, implements the steps of the above multi-user uplink synchronization signal processing method.

In addition, to achieve the above objective, the present application further provides a storage medium having a multi-user uplink synchronization signal processing program stored thereon, where the multi-user uplink synchronization signal processing program, when executed by a processor, implements the steps of the above multi-user uplink synchronization signal processing method.

The embodiments of the present application provide a technical solution of a signal processing method, a system, a management station, a transmitting end and a storage medium. The present application realizes uplink multi-user access and synchronization signal transmission by detecting the transmitting and receiving of multiple access and synchronization preamble sequences under the same time-frequency resource of the management station. The multi-user transmission interference is reduced through the transmission design of the preamble sequence, and the interference between end users of the received signal is reduced through the interference cancellation detection of the management station, so as to meet the performance requirements of more user access synchronization, lower latency, higher reliability and multi-access under the same time-frequency resource in industrial scenarios.

## BRIEF DESCRIPTION OF THE DRAWINGS

FIG. 1 is a schematic flowchart of a multi-user uplink synchronization signal processing method according to a first embodiment of the present application.

FIG. 2 is a schematic diagram of adding CP and GP in the present application.

FIG. 3 is a schematic diagram of a frequency-domain carrier mapping type with T zero-paddings padded.

FIG. 4 is a flowchart of dot multiplication after frequency-domain mapping in the present application.

FIG. 5 is a flowchart of acquiring a signal peak value and a corresponding position in the present application.

FIG. 6 is a schematic flowchart of interference cancellation for multi-user detection in the present application.

FIG. 7 is a schematic diagram of a frequency-domain carrier mapping type in the present application.

FIG. 8 is a flowchart of dot multiplication after frequency-domain demapping in the present application.

FIG. 9 is a flowchart of a first detection scheme of a management station in the present application.

FIG. 10 is a flowchart of a second detection scheme of the management station in the present application.

FIG. 11 is a flowchart of a third detection scheme of the management station in the present application.

FIG. 12 is a flowchart of a fourth detection scheme of the management station in the present application.

FIG. 13 is a schematic processing flowchart of a transmitting end in the present application.

FIG. 14 is a functional block diagram of a multi-user uplink synchronization signal processing system in the present application.

FIG. 15 is another functional block diagram of the multi-user uplink synchronization signal processing system in the present application.

FIG. 16 is a structural diagram of a hardware operating environment involved in embodiments of the present application.

The realization of the objectives, functional features and advantages of the present application will be further elaborated with reference to the embodiments and the accompanying drawings. The drawings are merely illustrative of an embodiment and do not represent the entirety of the present application.

## DETAILED DESCRIPTION OF THE EMBODIMENTS

Aiming at the problem that the existing wireless communication uplink access and synchronization technologies cannot meet the high-performance requirements in industrial scenarios, the present application designs a multi-user uplink synchronization signal processing method at the transmitting end and a multi-user uplink synchronization signal processing method at the management station. The present application implements uplink multi-user access and synchronization signal transmission by detecting the transmitting and receiving of the multiple access and synchronization preamble sequences under the same time-frequency resource of the management station. The multi-user transmission interference is reduced through the transmission design of the preamble sequence, and the interference between end users of the received signal is reduced through the interference cancellation detection of the management station, so as to meet the performance requirements of more user access synchronization, lower latency, higher reliability and multi-access under the same time-frequency resource in industrial scenarios.

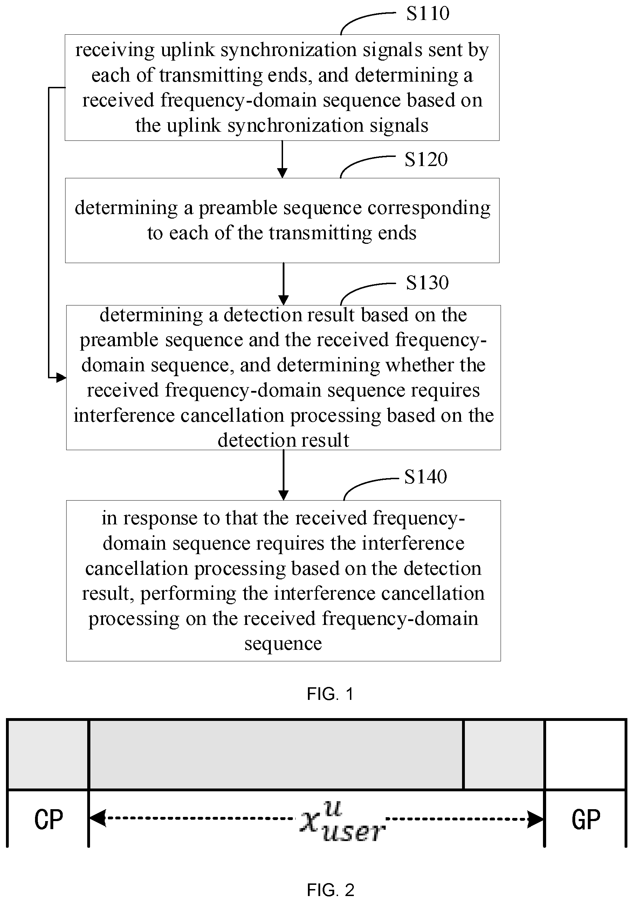

As shown in FIG. 1, in the first embodiment of the present application, the multi-user uplink synchronization signal processing method of the present application is applied to a management station, where the management station is a wireless device (small base station, large-scale PLC, large base station, etc.) with more complex functions for managing multiple transmitting ends. The multi-user uplink synchronization signal processing method of the present application includes the following steps:

step S110: receiving uplink synchronization signals sent by each of transmitting ends, and determining a received frequency-domain sequence based on the uplink synchronization signals.

In this embodiment, the uplink synchronization signal is a time-domain signal. The uplink synchronization signal refers to a signal used for time, frequency and phase synchronization of the uplink in a communication system. In a mobile communication system, the uplink synchronization signal is often referred to as an uplink reference signal. The main function of the uplink synchronization signal is to help the base station correctly receive and decode uplink signals from user equipment. By receiving the uplink synchronization signal, the base station can accurately obtain information such as the transmission timing, frequency offset and phase offset of the user equipment, so as to perform signal detection and decoding on the basis of correct timing, frequency and phase. The uplink synchronization signal is generally composed of specific sequences, which have certain periodicity and frequency-domain characteristics, and are sent to the base station after modulation and spreading. The base station estimates the characteristics of the uplink channel through the received uplink synchronization signal, and then optimizes the signal reception and demodulation performance.

In this embodiment, after being powered on, the management station may receive the uplink synchronization signals sent by each of the transmitting ends periodically or in real time. The management station may also configure which transmitting ends' uplink synchronization signals are to be received, so that the management station can flexibly receive the uplink synchronization signals sent by each of the transmitting ends.

Exemplarily, after being started or during operation, the management station periodically sends cell information and broadcasts cell messages to the transmitting ends. When powered on, the transmitting ends receive the cell messages and perform downlink synchronization. After downlink synchronization, the transmitting ends can receive the cell messages sent by the management station, generate their own uplink synchronization signals, and finally send their own uplink synchronization signals to the management station.

In an embodiment, after being powered on, the management station configures access or synchronization information of the transmitting ends, where the access or synchronization information includes but is not limited to a preamble sequence index table and management station detection process parameters. If a new transmitting end joins the access or synchronization process, the access and synchronization information is re-evaluated at the management station based on the new number of transmitting ends. After configuring the access or synchronization information, the management station performs access or synchronization signal detection according to the corresponding process, such as periodically sending cell information and receiving uplink synchronization signals sent by each of the transmitting ends.

This enables the management station to support the access effect of multi-user uplink synchronization signals.

In an embodiment, the access or synchronization information of the transmitting ends configured by the management station can also be cached. When the management station is powered on subsequently, the corresponding access or synchronization information is directly retrieved from the cache for use, avoiding cumbersome configuration operations and improving signal access or synchronization efficiency. The validity period of the access or synchronization information of the transmitting ends cached by the management station can also be set, and the corresponding cache is cleared when the validity period is exceeded. Alternatively, the corresponding cache is cleared when the idle duration of the cached access or synchronization information of the transmitting ends exceeds a preset duration. This improves signal access or synchronization efficiency while clearing the access or synchronization information of the transmitting ends that are not used for a long time and reducing memory occupancy.

In this embodiment, after receiving the uplink synchronization signals sent by each of the transmitting ends, the uplink synchronization signals corresponding to each of the transmitting ends are processed respectively to obtain the received frequency-domain sequence.

The received frequency-domain sequence refers to the frequency-domain representation of the uplink synchronization signal, i.e., the sequence obtained by converting the uplink synchronization signal from the time domain to the frequency domain. The received frequency-domain sequence is usually presented in complex form, where each complex number represents the amplitude and phase information at the corresponding frequency. By analyzing the received frequency-domain sequence, information such as the frequency components, spectrum distribution and energy distribution at different frequencies of the uplink synchronization signal can be obtained.

In an embodiment, Fourier transform and discrete Fourier transform processing can be performed on the uplink synchronization signals corresponding to each of the transmitting ends respectively. The time-domain uplink synchronization signal can be converted into the received frequency-domain sequence in the frequency domain through Fourier transform or discrete Fourier transform processing. In an embodiment, signal sampling can also be performed on the uplink synchronization signals corresponding to each of the transmitting ends respectively, and discrete uplink synchronization signals are obtained by sampling the received continuous uplink synchronization signals. Discrete-time Fourier transform is performed on the sampled discrete-time signals to obtain the received frequency-domain sequence.

In an embodiment, other methods can also be used to process the uplink synchronization signals corresponding to each of the transmitting ends to obtain the received frequency-domain sequence. For example, the cyclic prefix and guard period corresponding to each of the transmitting ends can be determined. Cyclic prefix removal processing is performed on the uplink synchronization signal based on the cyclic prefix, and guard period removal processing is performed on the uplink synchronization signal based on the guard period, to obtain the processed uplink synchronization signal corresponding to each of the transmitting ends. Fast Fourier transform or discrete Fourier transform is performed on the uplink synchronization signal to obtain the received frequency-domain sequence.

Exemplarily, the management station determines the cyclic prefix (CP) and guard period (GP) of the same size as each of the transmitting ends according to the system configuration. According to the configured CP and GP, cyclic prefix removal and guard period removal processing are performed on the uplink synchronization signal received by the management station to obtain the processed uplink synchronization signal $r_{all}$, so that its length is consistent with that of the uplink synchronization signal before transmission by the transmitting end, where the CP and GP structure is shown in FIG. 2. Fast Fourier transform or discrete Fourier transform is performed on the uplink synchronization signal $r_{all}$ after CP and GP removal to obtain the received frequency-domain sequence $R_{all}$. The purposes of CP and GP removal in the present application are to improve the performance and reliability of the communication system and reduce interference caused by multipath transmission and clock drift. The CP removal can counteract multipath interference and improve the anti-interference capability and spectrum efficiency of the system. The GP removal can counteract clock drift interference and improve the synchronization and reliability of the system. These two processing methods can improve the quality of signal transmission, thereby improving the performance and reliability of the system.

In an embodiment, after obtaining the received frequency-domain sequence, spectrum analysis is performed on the obtained received frequency-domain sequence, including checking the spectrum shape, frequency components, signal strength and other information. Signal processing and demodulation operations can also be performed on the received frequency-domain sequence to restore the original signal or extract required information.

Step S120: determining a preamble sequence corresponding to each of the transmitting ends.

In this embodiment, the preamble sequence is a group of special sequences used for synchronization and positioning in a communication system. They are inserted into the transmitted uplink synchronization signal by the transmitting end as signals recognizable and detectable by the management station during transmission, so as to help the management station perform synchronization and demodulation when the clock and frequency offset of the transmitted signal are unknown in advance. The transmitting end inserts the preamble sequence before the uplink synchronization signal being transmitted, and it is detected and identified at the management station. By comparing the received frequency domain sequence with the known preamble sequence, the management station can estimate time, frequency and phase, thereby achieving synchronization and positioning. The design of the preamble sequence depends on the specific communication system and application scenario. Generally, factors such as anti-interference performance, autocorrelation, cross-correlation and spectrum characteristics need to be considered in the design of the preamble sequence. Common preamble sequence design methods include pseudo-random sequences, ZC sequences, Gold sequences, etc. Through the use of preamble sequences, the communication system can achieve fast and reliable synchronization and positioning, improve anti-interference performance, and reduce the bit error rate.

In an embodiment, the specific parameter set corresponding to each of the transmitting ends can be determined. The preamble sequence corresponding to each of the transmitting ends is generated according to the specific parameter set corresponding to each of the transmitting ends.

In an embodiment, the specific parameter set corresponding to each of the transmitting ends can be determined according to the preamble sequence index corresponding to each of the transmitting ends and the mapping relationship between the preamble sequence index of each of the transmitting ends and the specific parameter set, where the preamble sequence index corresponding to each of the transmitting ends is pre-configured by the management station. The mapping relationship between the preamble sequence code and the specific parameter set of each of the transmitting ends can be stored in the preamble sequence index table, and the specific parameter set corresponding to each of the transmitting ends is obtained by looking up the preamble sequence index table. Alternatively, the specific parameter set corresponding to each of the transmitting ends is configured through the management station.

In an embodiment, the specific parameter set at least includes: a frequency-domain carrier mapping type specific to the transmitting end and a complete feature set for generating the preamble sequence. When the preamble sequence is a ZC sequence, the complete feature set of the ZC sequence includes: a root value u for generating the preamble sequence, cyclic shift Ncs, and ZC sequence length Nzc. When the preamble sequence is a pseudo-random sequence, the complete feature set of the pseudo-random sequence includes: a corresponding generator polynomial, cyclic shift Ncs, and the length of the pseudo-random sequence. The preamble sequence corresponding to each of the transmitting ends can be generated according to the complete feature set for generating the preamble sequence corresponding to each of the transmitting ends. Specifically, taking the preamble sequence as a ZC sequence as an example, the preamble sequence corresponding to each of the transmitting ends is generated according to the root value u and ZC sequence length Nzc of the preamble sequence corresponding to each of the transmitting ends. The present application reduces multi-user interference through the design of the preamble sequence.

Step S130: determining a detection result based on the preamble sequence and the received frequency-domain sequence, and determining whether the received frequency-domain sequence requires interference cancellation processing based on the detection result.

In this embodiment, interference such as noise, multipath effect and signals of other users exists in the communication environment, which may affect the received signal quality and adversely affect the communication performance. To reduce the interference between end users of the received signal, after determining the preamble sequence and the received frequency-domain sequence, the present application determines the detection result according to the preamble sequence and the received frequency-domain sequence, and determines whether the received frequency-domain sequence requires interference cancellation processing based on the detection result, thereby reducing the interference between end users of the received signal and meeting the performance requirements of more user access synchronization, lower latency, higher reliability and multi-access under the same time-frequency resource in industrial scenarios.

In this embodiment, the detection result includes that the first-detected transmitting end is a legitimate transmitting end, or the first-detected transmitting end is not a legitimate transmitting end. When the first-detected transmitting end is the legitimate transmitting end, it is determined whether the received frequency-domain sequence requires the interference cancellation processing.

Step S140: in response to that the received frequency-domain sequence requires the interference cancellation processing based on the detection result, performing the interference cancellation processing on the received frequency-domain sequence.

In this embodiment, if interference cancellation processing is not required, the management station processing is completed. If the interference cancellation processing is required, interference cancellation is performed on the received frequency-domain sequence. Whether interference cancellation processing is required is configured by the management station. For example, if the number of accessed or synchronized users is large, interference cancellation processing is enabled. The specific process of interference cancellation processing refers to the third embodiment, which is not repeated here.

In actual use, after the management station equipment is powered on, the access and synchronization information of the transmitting ends and the management station is configured. The access and synchronization information includes but is not limited to a preamble sequence index table and receiving end detection process parameters. If a new transmitting end joins the access and synchronization process, the access and synchronization information is re-evaluated at the management station based on the new number of transmitting ends. After configuring the access and synchronization information, the end station performs access and synchronization signal detection according to the corresponding process.

In an embodiment, after the interference cancellation processing is performed on the received frequency-domain sequence, the received frequency-domain sequence after the interference cancellation is obtained. After obtaining the received frequency-domain sequence after the interference cancellation, the synchronization processing of the uplink synchronization signal is performed again through the received frequency-domain sequence after the interference cancellation. When all users are detected and processed, a synchronization information report is output. The management station completes the synchronization processing of the uplink synchronization signals of all transmitting ends.

In this embodiment, according to the above technical solution, the present application implements uplink multi-user access and synchronization signal transmission by detecting the transmitting and receiving of the multiple access and synchronization preamble sequences under the same time-frequency resource of the management station. The multi-user transmission interference is reduced through the transmission design of the preamble sequence, and the interference between end users of the received signal is reduced through the interference cancellation detection of the management station, so as to meet the performance requirements of more user access synchronization, lower latency, higher reliability and multi-access under the same time-frequency resource in industrial scenarios.

Further, based on the first embodiment, in the second embodiment of the present application, step S130 includes:

step S131: performing frequency-domain carrier mapping on the preamble sequence corresponding to each of the transmitting ends based on a frequency-domain carrier mapping type to obtain a valid preamble sequence set, determining the detection result based on the valid preamble sequence set and the received frequency-domain sequence, and determining whether the received frequency-domain sequence requires the interference cancellation processing based on the detection result, where the frequency-domain carrier mapping type includes a zero-padding mode or a non-zero-padding mode.

In this embodiment, frequency-domain carrier mapping is a technology used in orthogonal frequency division multiplexing systems to map data symbols onto subcarriers. In an orthogonal frequency division multiplexing system, a signal is divided into multiple subcarriers, and each of the subcarriers is orthogonal to the others. Each of the subcarriers carries a part of the data symbols. The purpose of the frequency-domain carrier mapping is to optimally map these data symbols onto the corresponding subcarriers, so that the original data can be correctly recovered at the receiving end.

In this embodiment, different frequency-domain carrier mapping types can be adopted for frequency-domain carrier mapping according to actual situations. The frequency-domain carrier mapping type can be pre-configured in the management station. In the frequency-domain carrier mapping process, the zero-padding mode and the non-zero-padding mode are two different methods, which are mainly used to handle oversampling and interpolation of signals. The zero-padding mode implements oversampling by inserting additional zero values between the zero frequency, positive frequency and negative frequency in the frequency-domain representation of the input signal. The zero-padding mode can increase the number of data points in the frequency domain, thereby making the spectrogram smoother. The zero-padding mode performs zero-value filling on the signal without changing the specific value of the signal. The zero-padding mode can improve the frequency-domain resolution and make the frequency characteristics of the signal more obvious. The non-zero-padding mode refers to direct mapping in the frequency-domain representation of the input signal without oversampling the signal. The non-zero-padding mode does not change the number of frequency-domain data points of the signal and maintains the original frequency-domain characteristics. The non-zero-padding mode is suitable for keeping the sampling rate and spectrum characteristics of the original signal unchanged.

Differences between the zero-padding mode and the non-zero-padding mode are: the zero-padding mode can increase the number of frequency-domain data points, making the spectrogram smoother, thereby improving the frequency-domain resolution. The non-zero-padding mode maintains the frequency characteristics and sampling rate of the original signal. In addition, the zero-padding mode can improve the spectrum analysis accuracy of the signal, especially for the spectrum envelope characteristics. The non-zero-padding mode can perform frequency-domain mapping while maintaining the original characteristics of the signal. Whether zero-padding is performed in the present application is determined by the management station according to the number of accessed transmitting ends.

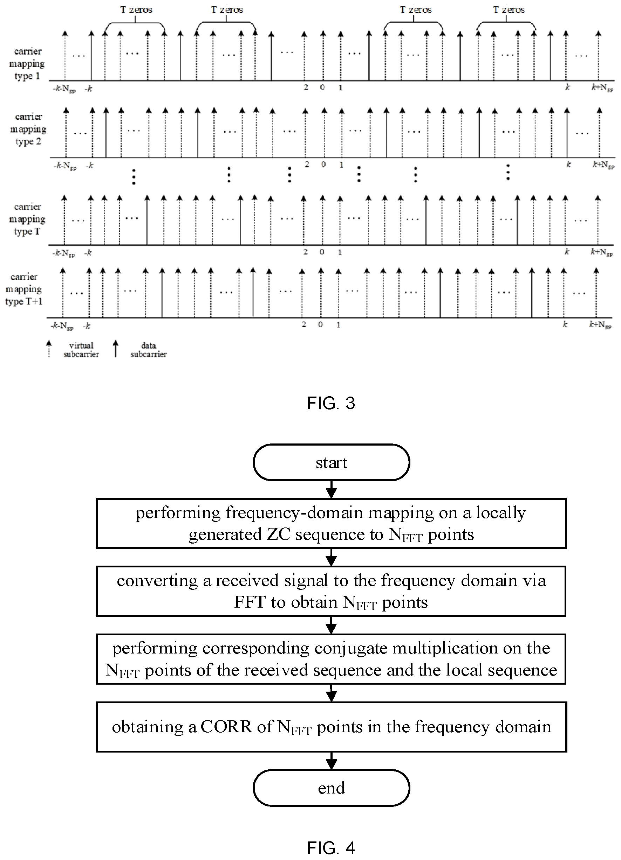

Exemplarily, the specific parameter set corresponding to each of the transmitting ends is determined according to the system configuration, and the specific parameter set of each of the transmitting ends is obtained by looking up the table according to the preamble sequence index or generated according to parameter configuration. The preamble sequence $Y_{user}^{set}$ of all users is generated according to the specific parameter set, where the size of $Y_{user}^{set}$ is Nu, and Nu is the number of preamble sequences expected to be detected by the management station, and its size is equal to the number of sequences in the management station. According to all specific parameter sets, the frequency-domain carrier mapping type of access or synchronization transmitted by the transmitting end is determined, where the frequency-domain carrier mapping type can be divided into a zero-padding mode (the zero-padding mode is shown in FIG. 3) and a non-zero-padding mode. Whether zero-padding is performed is determined by the management station according to the number of accessed transmitting ends, and the valid preamble sequence set $\widehat{Y}_{user}^{u}$ of all processed transmitting ends is obtained through carrier mapping.

In this embodiment, after obtaining the valid preamble sequence set, the detection result is determined according to the valid preamble sequence set and the received frequency-domain sequence, and whether the received frequency-domain sequence requires interference cancellation processing is determined based on the detection result.

In this embodiment, according to the above technical solution, frequency-domain carrier mapping is performed on the preamble sequence corresponding to each of the transmitting ends respectively to obtain the valid preamble sequence set of all transmitting ends, so that the original data can be correctly recovered at the management station.

In an embodiment, the determining the detection result based on the valid preamble sequence set and the received frequency-domain sequence includes the following steps:

Step S1311: determining an energy signal set based on the valid preamble sequence set and the received frequency-domain sequence.

In this embodiment, the preamble sequence is mainly used as a fixed-length sequence sent in advance in a communication system to help the receiver synchronize and locate data transmission. However, ordinary preamble sequences do not have requirements for uniqueness and distinguishability, so they may be used by multiple transmitters in the same communication network, resulting in the receiver failing to correctly identify and detect the data to be received. To this end, the valid preamble sequence emerges as a special preamble sequence and is widely used. The valid preamble sequence is a special sequence used for synchronization and positioning in a communication system, with a clear structure and characteristics. The valid preamble sequence has requirements for uniqueness and distinguishability, and needs to meet specific requirements such as high autocorrelation and cross-correlation. Therefore, when designing the valid preamble sequence, specific algorithms and techniques need to be adopted to generate correlated sequences. At the same time, the sequence is unique in the same communication network, so that the management station can accurately identify and detect. The valid preamble sequence set is a collection containing valid preambles of all transmitting ends.

In this embodiment, the energy signal set can be used for subsequent operations such as signal processing, channel estimation, and channel equalization to improve system performance and reliability. The received frequency-domain sequence can be correlated with a predetermined valid preamble sequence to obtain an energy signal set corresponding to each of the transmitting ends. The correlation calculation can adopt linear correlation or nonlinear correlation. The energy signal set obtained by correlation calculation contains information corresponding to the valid preamble sequence. These sequences can be restored to the original baseband signal through subsequent processing such as demodulation and decoding, and the transmitted information can be obtained, improving system reliability and anti-interference performance.

Step S1312: performing time-domain merging on the energy signal set to obtain a merged energy signal set.

In this embodiment, the purpose of time-domain merging is to combine multiple time-domain signals into a longer time-domain signal. If the values of two time-domain signals at discrete time points are known, the values at the corresponding time points can be directly added to obtain the merged signal. If the sampling rates of the two signals are different or there is a time offset, interpolation or alignment operations are required to enable the two time-domain signals to be merged at the same time points. The purposes of time-domain merging include:

(1) Signal compensation: in a communication system, signal transmission may be affected by factors such as multipath effect and fading, resulting in problems such as time latency and distortion of the received signal. Through time-domain merging, multiple received time-domain signals can be combined to compensate for time latency and distortion in the signals, improving signal quality and reliability.

(2) Signal enhancement: time-domain merging can superpose multiple time-domain signals together, thereby enhancing the amplitude and energy of the signals. This is very useful for receiving signals or performing signal detection and demodulation operations in a low signal-to-noise ratio environment, and can improve the detectability and reliability of time-domain signals.

(3) Increasing observation time: through time-domain merging, multiple time-domain signals can be connected in time order to form a longer observation time window. This is very useful for applications requiring long-term observation and analysis, such as target tracking and positioning in radar systems.

(4) Frequency spreading: time-domain merging can perform frequency spreading through frequency-domain transformation and other methods after combining multiple time-domain signals. Frequency spreading can increase the bandwidth of the signal, improving the information transmission capability and anti-interference performance of the system.

Step S1313: acquiring a signal peak value and a noise power in the merged energy signal set.

Step S1314: performing threshold detection based on the signal peak value and the noise power to obtain the detection result.

In this embodiment, threshold detection is performed according to the noise power and the signal peak value to obtain the detection result. The detection result includes that the first-detected transmitting end is a legitimate transmitting end, or the first-detected transmitting end is not a legitimate transmitting end. When the first-detected transmitting end is the legitimate transmitting end, it is determined that the received frequency-domain sequence needs interference cancellation processing. When the first-detected transmitting end is an invalid transmitting end, it is determined that the received frequency-domain sequence does not need the interference cancellation processing.

In this embodiment, according to the above technical solution, since the energy signal set is determined based on the valid preamble sequence set and the received frequency-domain sequence; the time-domain merging is performed on the energy signal set to obtain a merged energy signal set; and the threshold detection is performed according to the signal peak value and noise power in the merged energy signal set to obtain the detection result, thereby implementing the interference cancellation detection.

In an embodiment, step S1311 includes the following steps:

Step S13111: performing conjugate multiplication on the valid preamble sequence set and the received frequency-domain sequence to obtain a frequency-domain signal sequence.

In this embodiment, the purpose of multiplying the valid preamble sequence set and the received frequency-domain sequence is to perform correlation calculation to achieve symbol synchronization and channel estimation. In a communication system, the valid preamble sequence is used to identify and synchronize the start position of a data frame. The received frequency-domain sequence is a sequence representing channel characteristics obtained by the receiving end through frequency-domain analysis of the received signal. Multiplying the preamble sequence set with the received frequency-domain sequence to obtain the frequency-domain signal sequence corresponding to each of the transmitting ends can achieve the following two functions:

symbol synchronization: correlation calculation can help find the position of the valid preamble sequence in the received signal, thereby achieving accurate cutting and demodulation of the data frame. By detecting the peak value of the correlation calculation result, the start position of the preamble sequence can be determined, and then the received signal can be correctly decoded.

Channel estimation: through correlation calculation, the influence of the channel can be estimated using the product of the valid preamble sequence set and the received frequency-domain sequence. Since the structure of the valid preamble sequence is known, the attenuation, multipath effect and other information caused by the channel can be inferred by observing the amplitude and phase changes of the correlation calculation result, and then channel estimation and equalization can be performed to improve signal transmission quality.

Therefore, multiplying the valid preamble sequence set and the frequency-domain sequence is an important step in a communication system, used to achieve symbol synchronization and channel estimation to improve signal reliability and transmission efficiency.

Exemplarily, referring to FIG. 4, the preamble sequence corresponding to the transmitting end is mapped to a valid preamble sequence containing NFFT points in the frequency domain. The uplink synchronization signal corresponding to the transmitting end is Fourier-transformed to a received frequency-domain sequence containing NFFT points in the frequency domain. The NFFT points of the valid preamble sequence and the received frequency-domain sequence are subjected to corresponding conjugate multiplication to obtain a frequency-domain signal sequence containing NFFT points in the frequency domain.

Step S13112: performing an inverse Fourier transform on the frequency-domain signal sequence to obtain a time-domain signal sequence.

In this embodiment, the inverse Fourier transform is used to map the multiplied frequency-domain signal sequence from the frequency domain to the time domain, and the inverse Fourier transform converts the frequency-domain signal sequence into a corresponding time-domain signal sequence. After the inverse Fourier transform, the obtained time-domain signal sequence represents the waveform of the multiplied sequence set in the time domain. Each element represents the signal strength at a moment.

Step S13113: calculating a square value after taking an absolute value of the time-domain signal sequence to obtain the energy signal set.

In this embodiment, taking the absolute value and then averaging the time-domain signal sequence is to convert the time-domain signal sequence into an equivalent energy signal for subsequent processing. Specifically, the absolute value operation is performed on each element in the time-domain signal sequence, and then the result is squared to obtain a corresponding energy signal set, so that the signal energy at each moment can be calculated.

In this embodiment, these time-domain signal sequences represent signals received by the receiving end after channel transmission, containing influences of different factors such as multipath reflection and noise. To better process these signals, they need to be converted into equivalent energy signals for subsequent operations. Therefore, the present application uses absolute value averaging to convert the time-domain signal sequence into a corresponding energy signal set. For a time-domain signal sequence, absolute value and averaging operations can be performed on each time-domain signal sequence one by one. The absolute value operation can eliminate the influence of positive and negative signs in the time-domain signal sequence and turn it into a non-negative real value. The averaging operation can average the energy of the time-domain signal sequence, thereby obtaining an energy signal set representing the energy distribution of the time-domain signal sequence.

in subsequent processing, this energy signal set can be used for further processing such as channel estimation and equalization. Therefore, taking the absolute value and averaging the energy signal set to obtain the corresponding energy signal set is a very important step, which provides a basis for subsequent processing.

In this embodiment, according to the above technical solution, the multiplied frequency-domain signal sequence can be converted from the frequency domain to the time domain, and the corresponding energy signal set can be calculated. These energy signal sets can be used for subsequent operations such as signal processing, channel estimation, and channel equalization to improve system performance and reliability.

In an embodiment, step S1312 includes the following steps:

Step S13121: summing energy signals of each of antennas in the energy signal set to obtain an antenna merged energy signal set, or summing energy signals meeting a merging condition in the energy signal set to obtain an antenna merged energy signal set.

In this embodiment, antenna merging and segment merging can be performed based on the energy signal set to obtain a merged energy signal set. The antenna merging is to obtain antenna gain, and segment merging is because zero-padding will cause time-domain repetition, and segment merging is used to obtain gain of repeated segments.

Specifically, the antenna merging includes equal-gain merging, selective merging or maximal-ratio merging. The equal-gain merging means that the energy signal sets on all receiving antennas are added correspondingly, the selective merging means that the energy signal sets on antennas meeting the merging condition are accumulated, and those not meeting the condition are not involved in merging. The antenna merged energy signal set is obtained through antenna merging, where there are multiple antenna merged energy signal sets.

In an embodiment, the merging condition includes that the signal-to-noise ratio is greater than a preset signal-to-noise ratio, or whether the energy signal set of the transmitting end has a signal peak value. Specifically, the energy signal sets corresponding to the transmitting ends with a signal-to-noise ratio greater than the preset signal-to-noise ratio are summed to obtain an antenna merged energy signal set. Alternatively, it is detected whether the energy signal set has a signal peak value, and the energy signal sets corresponding to the transmitting ends with a signal peak value are summed to obtain an antenna merged energy signal set.

Step S13122: dividing the antenna merged energy signal set into energy signal sets with equal-length.

In this embodiment, assuming that the antenna merged energy signal set includes 256 points, for example, the first 128 points of 256 points form one segment, and the last 128 points form another segment. The number of segments is related to the number of zero-paddings: one zero-padding divides into two segments, and three zero-paddings divide into four segments ((1:64 as one segment, 65:128 as one segment, 129:192 as one segment, and 193 to 256 as one segment).

Step S13123: summing corresponding energy signals in the energy signal sets with equal-length to obtain the merged energy signal set.

In this embodiment, after obtaining the antenna emerged energy signal set through antenna merging, segment merging is performed. The segment merging means that the antenna emerged energy signal set is divided into energy signal sets with equal-length, and then the corresponding points of each segment are emerged to obtain an energy signal set of half the original length. Since multiple time-domain signals are combined into a longer signal processing method, the performance and reliability of signal processing and communication systems are improved through compensation, enhancement, increased observation time and frequency spreading.

In an embodiment, step S1313 includes the following steps:

step S13131: determining a signal peak value in the merged energy signal set.

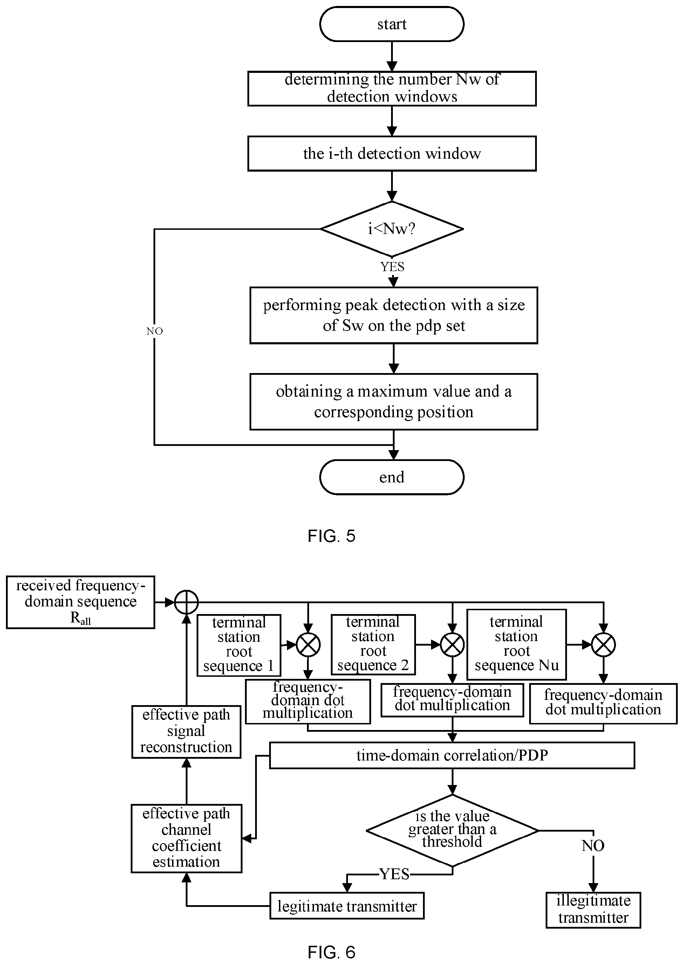

In this embodiment, after obtaining the merged energy signal set, the signal peak value and the corresponding position of the signal peak value in the merged energy signal set are acquired, and the corresponding noise power is obtained according to the merged energy signal set. The process of acquiring the signal peak value and the corresponding position of the signal peak value is shown in FIG. 5. First, the number of detection windows is determined. When the current detection window is less than the number of detection windows, signal peak value detection is performed on the merged energy signal set based on a preset window size to obtain the signal peak value and the corresponding position of the signal peak value. When the current number of detection windows is greater than or equal to the number of detection windows, the process ends.

Step S13132: acquiring residual energy signals in the merged energy signal set except the signal peak value and a preset number of signal points adjacent to the signal peak value.

In this embodiment, the preset number can be configured in the management station. The preset number of signal points adjacent to the signal peak value specifically refers to the preset number of signal points adjacent to both sides of the signal peak value.

Step S13133: calculating an average signal energy based on each of the residual energy signals, and taking the average signal energy as the noise power.

In this embodiment, according to the above technical solution, the noise power is determined through the above technical solution for subsequent identification of legitimate transmitting ends and invalid transmitting ends.

In an embodiment, step S1314 includes:

step S13141: determining a detection threshold based on the noise power and a threshold constant.

Step S13142: in response to that the signal peak value is greater than the detection threshold, determining that the transmitting end is a first-detected transmitting end.

In this embodiment, the transmitting end corresponding to the signal peak value greater than the detection threshold is acquired, and the transmitting end is determined as the first-detected transmitting end. The position corresponding to the signal peak value of the first-detected transmitting end and the complete feature set of the corresponding preamble sequence are saved, and the relevant information of the first-detected transmitting end is stored to facilitate distinguishing from subsequently detected transmitting ends.

When the signal peak value is less than or equal to the detection threshold, it is determined that the transmitting end is not a first-detected transmitting end, and no processing is performed on the transmitting end.

Step S13143: in response to that the first-detected transmitting end meets a preset condition, determining that the detection result is that the first-detected transmitting end is a legitimate transmitting end.

In this embodiment, the preset condition includes: the signal-to-noise ratio corresponding to the first-detected transmitting end is greater than a preset signal-to-noise ratio; or the timing advance information corresponding to the first-detected transmitting end is less than a preset timing advance information threshold.

In other embodiments, when the first-detected transmitting end does not meet the preset condition, it is determined that the detection result is that the first-detected transmitting end is an invalid transmitting end. If the preset condition is not met, no interference cancellation processing is performed on the received frequency-domain sequence.

Specifically, whether it is the legitimate transmitting end can be determined according to the preset signal-to-noise ratio or preset timing advance information threshold set by the management station. For example, when the signal-to-noise ratio corresponding to the first-detected transmitting end is greater than the preset signal-to-noise ratio, it is determined that the first-detected transmitting end is the legitimate transmitting end; or when the timing advance (TA) corresponding to the first-detected transmitting end is greater than the preset timing advance, it is determined that the first-detected transmitting end is the legitimate transmitting end. On the contrary, when the signal-to-noise ratio corresponding to the first-detected transmitting end is less than or equal to the preset signal-to-noise ratio, it is determined that the first-detected transmitting end is an invalid transmitting end; or when the timing advance (TA) corresponding to the first-detected transmitting end is less than or equal to the preset timing advance, it is determined that the first-detected transmitting end is an invalid transmitting end. The present application can identify legitimate transmitting ends and invalid transmitting ends, perform interference cancellation on the received frequency-domain sequence, avoid the problem of low interference cancellation efficiency caused by performing interference cancellation on all first-detected transmitting ends, and improve interference cancellation processing efficiency.

In an embodiment, in step 131, the determining whether the received frequency-domain sequence requires the interference cancellation processing based on the detection result further includes: in response to that the detection result is that the first-detected transmitting end is the legitimate transmitting end, determining whether the received frequency-domain sequence requires the interference cancellation processing based on a current total number of transmitting ends.

In this embodiment, when the detection result is that the first-detected transmitting end is the legitimate transmitting end, it is determined whether the received frequency-domain sequence needs interference cancellation processing according to the current total number of transmitting ends. The management station can set whether to perform interference cancellation processing. For example, when the current total number of transmitting ends reaches a preset number, interference cancellation processing is performed on the received frequency-domain sequence. That is, the conditions for performing interference cancellation processing are: first, the system is configured to perform interference cancellation, and then the interference cancellation operation can be performed. Second, the detection result meets the preset condition. When these two conditions are met at the same time, it is necessary to cancel the detected legitimate signal, so that the management station no longer contains the interference of the detected legitimate signal on other signal detection.

For example, the specific implementation of the second embodiment of the present application is described in detail as follows:

assume that the physical channel has a bandwidth of 20 MHz, with a specified inverse Fourier transform length $N_{IFFT}$ = 256. The number of useful data subcarriers is $N_{Data}$ = 240, the number of guard subcarriers on each side is $N_{gp}$ = 8, and the number of DC subcarriers is $N_{NULL}$ = 3. The preamble sequence is a ZC sequence, and the complete feature set of the preamble sequence includes the ZC sequence root value u, user-specific cyclic shift Ncs=0, user-specific frequency-domain resource mapping type, and ZC sequence length Nzc=113. Meanwhile, the number of transmitting ends performing uplink synchronization is Nu=4. The window size for threshold detection is Sw, and the interference cancellation flow is disabled, which supports access and synchronization of a small number of users. Specifically:

Step 1: starting, by the management station, reception.

Step 2: determining, by the management station, CP and GP parameters of the same size for each transmitting end according to the system configuration.

Step 3: performing CP removal and GP removal on the received uplink synchronization signals of the management station based on the CP and GP sizes obtained in step 2, to obtain processed uplink synchronization signals $r_{all}$ with the same length as the uplink synchronization signals before transmission by each transmitting end.

Step 4: performing Fourier transform on the uplink synchronization signals $r_{all}$ after CP and GP removal to obtain the received frequency-domain sequence $R_{all}$.

Step 5: determining the specific parameter set of all transmitting ends according to the system configuration. The specific parameter set of all transmitting ends contains a collection of parameters for generating the specific parameter set of each transmitting end, and the specific parameter set of each transmitting end is obtained by looking up the table according to the preamble sequence index.

Step 6: generating the preamble sequence set $Y_{user}^{set}$ according to the specific parameter set of all transmitting ends obtained in step 5, where the size of the preamble sequence set $Y_{user}^{set}$ is Nu, and a certain preamble sequence $Y_{user}^{u}$ in the preamble sequence set $Y_{user}^{set}$ is expressed as:

$$Y_{user}^{u} = e^{-j\pi un(n+1)/L}, u \in \{1, \ldots, Nzc - 1\}, n = 0, 1, \ldots, Nzc - 1.$$

Step 7: determining the access and synchronization frequency-domain carrier mapping type transmitted by the transmitting ends according to the specific parameter set of all transmitting ends. The frequency-domain carrier mapping type is divided into zero-padding and non-zero-padding modes, and whether to perform zero-padding is determined by the management station according to the number of accessed users. The processed valid preamble sequence $\widehat{Y}_{user}^{u}$ is obtained thereafter.

Step 8: performing correlation calculation between each valid preamble sequence $\widehat{Y}_{user}^{u}$ after frequency-domain carrier mapping in step 7 and the received frequency-domain sequence $R_{all}$ to obtain the frequency-domain signal sequence CORR, and the calculation formula is:

$$CORR\{i\} = \widehat{Y}_{user}^{u}(n) * conj[R_{all}(n)]$$

where $u \in \{1, \ldots, Nzc - 1\}$, $n = \{0, 1, \ldots, Nzc - 1\}$, $i \in \{1, \ldots, Nu - 1\}$, u represents a total of Nu possible values, assumed to be four possible values herein. conj[·] denotes the conjugate operation. The valid preamble sequence refers to the preamble sequence corresponding to the preamble sequence index expected to be detected by the management station.

Step 9: performing inverse Fourier transform on the frequency-domain signal sequence CORR obtained in step 8 to the time domain to obtain the time-domain signal sequence corr, and calculating the squared absolute value of the time-domain signal sequence corr to obtain the corresponding energy signal set PDP. The calculation formula is:

$$PDP = [abs(corr)]^2$$

where abs(·) denotes the absolute value operation.

Step 10: performing time-domain merging on the energy signal set PDP obtained in step 9, including antenna merging and segment merging, to obtain the merged energy signal set pdp.

Step 11: obtaining the signal peak and its corresponding position in the merged energy signal set pdp obtained in step 10, and calculating the corresponding noise power $\gamma$ according to pdp.

Step 12: performing threshold detection according to the noise power and the signal peak in the corresponding pdp, and obtaining the detection result meeting the preset condition. A transmitting end is determined as the first-detected transmitting end when the following condition is satisfied:

the signal peak is greater than Th*$\gamma$

where Th is the threshold constant. The position corresponding to the signal peak greater than the detection threshold (Th*$\gamma$) is determined based on the above formula, and the complete feature set of the corresponding preamble sequence is saved.

Step 13: after all transmitting ends are detected and processed, outputting the obtained synchronization information report.

Step 14: completing, by the management station, the synchronization processing of uplink synchronization signals of all transmitting ends.

Based on the above technical solution, this embodiment first determines the energy signal set, then performs time-domain merging on the energy signal set to obtain the merged energy signal set; further performs threshold detection according to the signal peak and noise power determined by the merged energy signal set to obtain the detection result; finally, determines whether the received frequency-domain sequence requires interference cancellation according to the detection result. It implements the interference cancellation detection for multi-user uplink synchronization signals and avoids signal interference between each transmitting end.

Further, based on the first embodiment or the second embodiment, the third embodiment of the present application introduces an interference cancellation method. Specifically, after determining whether the received frequency-domain sequence requires the interference cancellation processing based on a current total number of transmitting ends, performing the interference cancellation processing on the received frequency-domain sequence in step S140 includes:

step S141: acquiring a unique identifier corresponding to the legitimate transmitting end.

In this embodiment, the number of the unique identifiers is less than or equal to the number of the transmitting ends.

Step S142: determining a valid preamble sequence corresponding to the legitimate transmitting end based on the unique identifier.

Step S143: acquiring a valid path channel coefficient and timing advance information corresponding to the legitimate transmitting end.

In this embodiment, the valid path channel coefficient refers to a parameter measuring the influence degree of each path on the received signal in a multipath propagation environment. In wireless communication and mobile communication systems, transmitted signals usually reach the management station through multiple paths (multipath), and signals of each path experience different path loss, Doppler effect, phase delay, etc. The valid path channel coefficient describes the relationship between the strength and time latency of these paths. The valid path channel coefficient can be expressed in complex form, including amplitude and phase information. The amplitude represents the strength of the path signal, and the phase represents the relative time latency of the path signal. Generally, the valid path channel coefficient can be used to simulate and calculate the time-varying characteristics of the signal, and is of great significance for channel modeling and performance evaluation. In practical applications, the valid path channel coefficient can be obtained by measuring and collecting signal data. Through signal processing technologies such as frequency-domain analysis, autocorrelation function, least square method, etc., the valid path channel coefficient can be extracted from the received signal.

In this embodiment, in a wireless communication system, since there is spatial separation between the transmitting end and the receiving end, the signal propagation path and environmental characteristics will vary with the position of the transmitting end, so the corresponding valid path channel coefficients are also different, that is, the valid path channel coefficients corresponding to different transmitting ends are usually different, and the valid path channel coefficient corresponding to the legitimate transmitting end can be obtained.

In an embodiment, a time-domain auto-correlation peak value of the valid preamble sequence corresponding to the legitimate transmitting end and a time-domain cross-correlation value between the valid preamble sequence corresponding to the legitimate transmitting end and the received frequency-domain sequence is acquired; and the valid path channel coefficient corresponding to the legitimate transmitting end according to the time-domain auto-correlation peak value and the time-domain cross-correlation value is determined.

Step S144: reconstructing the valid preamble sequence corresponding to the legitimate transmitting end based on the valid path channel coefficient and the timing advance information to obtain a reconstructed valid preamble sequence.

In this embodiment, according to the valid path channel coefficient and timing advance information corresponding to the legitimate transmitting end, the valid preamble sequence $\widehat{Y}^u_{user}$ corresponding to the legitimate transmitting end is reconstructed to obtain a reconstructed valid preamble sequence. The signal reconstruction formula is as follows:

$$\widetilde{Y}^u_{user} = h \times \widehat{Y}^u_{user} \times e^{-2\pi j * TA}$$

where h represents the valid path channel coefficient; $\widehat{Y}^u_{user}$ represents the valid preamble sequence corresponding to the legitimate transmitting end; TA represents the timing advance information; and $\widetilde{Y}^u_{user}$ represents the reconstructed valid preamble sequence. Signal reconstruction reconstructs discrete signals into original signals for subsequent interference cancellation processing.

Step S145: performing interference cancellation on the received frequency-domain sequence through the reconstructed valid preamble sequence.

In this embodiment, according to the reconstructed valid preamble sequence, interference cancellation is performed on the received frequency-domain sequence, and the cancellation formula is as follows:

$$\widehat{R}_{all} = R_{all} - \widetilde{Y}^u_{user}$$

where $\widetilde{Y}^u_{user}$ represents the reconstructed valid preamble sequence, $R_{all}$ represents the received frequency-domain sequence, and $\widehat{R}_{all}$ represents the received frequency-domain sequence after interference cancellation. That is, the difference between the received frequency-domain sequence and the reconstructed valid preamble sequence is calculated to obtain the received frequency-domain sequence after interference cancellation.

For example, the specific process of the third embodiment of the present application is described in detail as follows:

Assume that the physical channel has a bandwidth of 20 MHz and adopts the Inverse Fast Fourier Transform (IFFT) with a specified **IFFT** length $N_{IFFT}$ = 256. The number of useful data subcarriers is $N_{Data}$ = 240, the number of guard subcarriers on each side is $N_{gp}$ = 8, and the number of DC subcarriers is $N_{NULL}$ = 3. The preamble sequence is a ZC sequence, and the complete feature set of the preamble sequence includes the ZC sequence root value u, user-specific cyclic shift Ncs=0, user-specific frequency-domain resource mapping type, and ZC sequence length Nzc=113. Meanwhile, the number of users performing uplink synchronization is Nu=8. The window size for threshold detection is Sw. The interference cancellation process is enabled, which supports access and synchronization of more users, e.g., 8 users. The steps are as follows:

steps 1 to 12 are the same as those in the second embodiment and are omitted here.

Step 13: performing interference cancellation according to the detection result in step 12, where the interference cancellation method is shown in FIG. 6;

first, obtaining the first-detected transmitting end according to steps 1 to 12;

then, determining whether it is a legitimate transmitting end according to the preset condition set by the management station, where the threshold may be signal-to-noise ratio, timing advance information, etc.;

then, determining the valid preamble sequence $\widehat{Y}^u_{user}$ according to the corresponding detected unique identifier, where the number of detected unique identifiers is less than or equal to Nu. Meanwhile, the valid path channel coefficient h is obtained according to the time-domain auto-correlation peak value of $\widehat{Y}^u_{user}$ and the time-domain cross-correlation value between $\widehat{Y}^{u}_{user}$ and the received signal $R_{all}$;

then, reconstructing the corresponding frequency-domain carrier-mapped preamble sequence $\widehat{Y}^{u}_{user}$ according to the corresponding timing advance information of the legitimate transmitting end to obtain the reconstructed valid preamble sequence:

$$\widetilde{Y}^{u}_{user} = h \times \widehat{Y}^{u}_{user} \times e^{-2\pi j * TA}.$$

Finally, performing interference cancellation on the received frequency-domain sequence using the reconstructed valid preamble sequence as follows:

$$\widehat{R}_{all} = R_{all} - \widetilde{Y}^{u}_{user}.$$

Step 14: re-performing synchronization processing on the received frequency-domain sequence $\hat{R}_{all}$ after the interference cancellation in step 13, i.e., repeating steps 8 to 13.

Step 15: after all users are detected and processed, outputting the obtained synchronization information report.

Step 16: completing, by the management station, the synchronization processing of uplink synchronization signals of all transmitting ends.

Based on the above technical solution, this embodiment reduces the interference between end users of the received signal through interference cancellation detection and interference cancellation processing at the management station, so as to meet the performance requirements of more user access synchronization, lower latency, higher reliability and multi-access under the same time-frequency resource in industrial scenarios.

Further, based on the first embodiment, in the fourth embodiment of the present application, the difference between the fourth embodiment and the second embodiment is that frequency-domain carrier mapping is not performed on the preamble sequence. Specifically, step S130 in the fourth embodiment of the present application includes:

Step S132: performing frequency-domain carrier demapping on the received frequency-domain sequence to obtain a received frequency-domain sequence after the frequency-domain carrier is demapped, determining a detection result based on the preamble sequence corresponding to each of the transmitting ends and the received frequency-domain sequence after the frequency-domain carrier is demapped, and determining whether the received frequency-domain sequence after the frequency-domain carrier is demapped requires the interference cancellation processing based on the detection result.

In this embodiment, frequency-domain carrier demapping is processing the received signal at the receiving end of orthogonal frequency division multiplexing to recover original data. In an orthogonal frequency division multiplexing system, the transmitting end maps data symbols onto multiple subcarriers and sends the signal out through orthogonal modulation. At the receiving end, the received signal requires multiple steps of processing to be restored to original digital data. The frequency-domain carrier demapping process is a key step. In the frequency-domain carrier demapping process, the receiving end needs to know which subcarriers the transmitting end sends data symbols on, as well as the modulation mode and power allocation used. Then, the receiving end converts the received signal from the frequency domain to the time domain, and uses a corresponding demodulation technology to convert the analog signal into digital data. Therefore, through demapping frequency-domain carrier, original digital data can be recovered from the received signal for subsequent data processing and applications.

In this embodiment, frequency-domain carrier mapping is not performed on the preamble sequence corresponding to each of the transmitting ends in the preamble sequence set. The received $N_{ZC}$ preamble sequence values are extracted from the received frequency-domain sequence according to the frequency-domain carrier mapping position to form a received frequency-domain sequence $\hat{R}_{all}$ after the frequency-domain carrier is demapped.

In this embodiment, after obtaining the received frequency-domain sequence after the frequency-domain carrier is demapped, it is determined whether the received frequency-domain sequence needs interference cancellation processing according to the preamble sequence and the received frequency-domain sequence after the frequency-domain carrier is demapped.

In this embodiment, according to the above technical solution, frequency-domain carrier demapping is performed on the received frequency-domain sequence to obtain a received frequency-domain sequence after the frequency-domain carrier is demapped, and it is determined whether the received frequency-domain sequence needs interference cancellation processing according to the preamble sequence and the received frequency-domain sequence after the frequency-domain carrier is demapped, so that the original signal can be obtained and corresponding interference cancellation detection can be performed.

In an embodiment, in step S132, determining the detection result based on the preamble sequence corresponding to each of the transmitting ends and the received frequency-domain sequence after the frequency-domain carrier is demapped includes the following steps:

Step S1321: determining an energy signal set based on the preamble sequence corresponding to each of the transmitting ends and the received frequency-domain sequence after the frequency-domain carrier is demapped.

Step S1322: performing time-domain merging on the energy signal set to obtain a merged energy signal set.

Step S1323: acquiring a signal peak value and a noise power in the merged energy signal set.

Step S1324: performing threshold detection based on the signal peak value and the noise power to obtain the detection result.

In an embodiment, step S1321 includes the following steps:

step S13211: performing conjugate multiplication on the preamble sequence corresponding to each of the transmitting ends and the received frequency-domain sequence after the frequency-domain carrier is demapped to obtain a frequency-domain signal sequence.

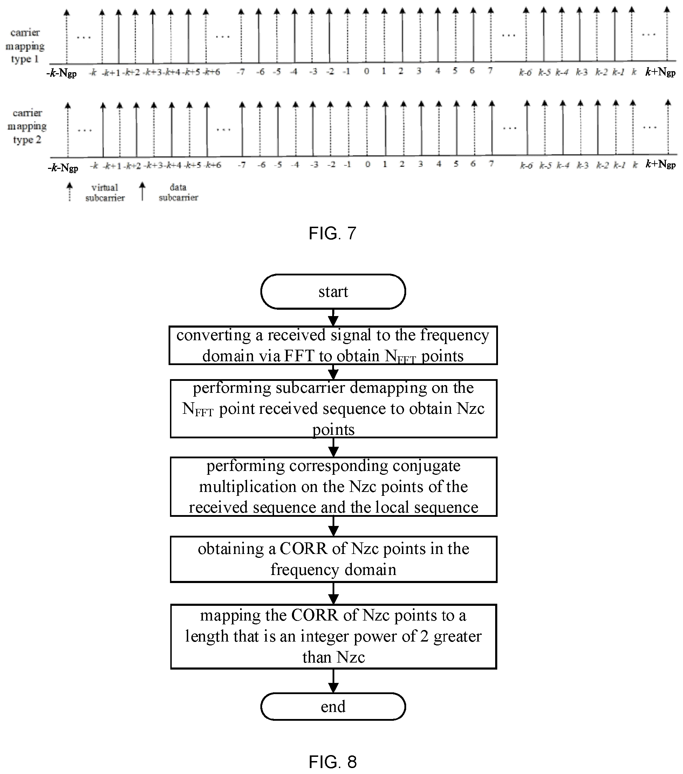

In this embodiment, referring to FIG. 8, no frequency-domain subcarrier mapping is performed on each preamble sequence $Y_{user}^u$ in the preamble sequence set $Y_{user}^{set}$. The received values $\hat{R}_{all}$ of the corresponding $N_{ZC}$ preamble sequences are extracted from the received frequency-domain sequence according to the frequency-domain subcarrier mapping positions. The dot multiplication is performed on each preamble sequence $Y_{user}^{set}$ and the received frequency-domain sequence $\hat{R}_{all}$ after frequency-domain carrier demapping to obtain a frequency-domain signal sequence CORR, with the calculation formula as follows:

$$CORR\{i\} = Y_{user}^{set}(n) * conj\left[\hat{R}_{all}(n)\right]$$

where u E {1,..., Nzc - 1}, n = {0,1, ..., $N_{ZC}$ - 1}, i E {1,..., Nu - 1}. u represents a total of Nu possible values. conj[·] denotes the conjugate operation.

Finally, frequency-domain mapping is performed on the obtained $N_{ZC}$ points of the frequency-domain signal sequence CORR to a length that is a power of 2 greater than $N_{ZC}$. Therefore, the frequency-domain signal sequence is obtained by dot multiplication after frequency-domain demapping.

Step S23212: performing an inverse Fourier transform on the frequency-domain signal sequence to obtain a time-domain signal sequence.

Step S23213: calculating a square value after taking an absolute value of the time-domain signal sequence to obtain the energy signal set.

In an embodiment, step S1322 includes the following steps:

Step S13221: summing energy signals of each of antennas in the energy signal set to obtain an antenna merged energy signal set, or summing energy signals meeting a merging condition in the energy signal set to obtain an antenna merged energy signal set.

Step S13222: dividing the antenna merged energy signal set into energy signal sets with equal-length.

Step S13223: summing corresponding energy signals in the energy signal sets with equal-length to obtain the merged energy signal set.

In an embodiment, step S1323 includes the following steps:

step S13231: determining a signal peak value in the merged energy signal set.

Step S13232: acquiring residual energy signals in the merged energy signal set except the signal peak value and a preset number of signal points adjacent to the signal peak value.

Step S13233: calculating an average signal energy based on each of the residual energy signals, and taking the average signal energy as the noise power.

In an embodiment, step S1324 includes the following steps:

step S13241: determining a detection threshold based on the noise power and a threshold constant.

Step S13242: in response to that the signal peak value is greater than the detection threshold, determining that the transmitting end is a first-detected transmitting end; and in response to that the first-detected transmitting end meets a preset condition, determining that the detection result is that the first-detected transmitting end is a legitimate transmitting end.

Step S13243: in response to that the first-detected transmitting end meets a preset condition, determining that the detection result is that the first-detected transmitting end is a legitimate transmitting end.

In an embodiment, in step S132, determining whether the received frequency-domain sequence after the frequency-domain carrier is demapped requires the interference cancellation processing based on the detection result: in response to that the detection result is that the first-detected transmitting end is the legitimate transmitting end, determining whether the received frequency-domain sequence after the frequency-domain carrier is demapped requires the interference cancellation processing based on a current total number of transmitting ends.

The implementation and specific embodiments of the above steps in the fourth embodiment are similar to those in the second embodiment. For details, refer to the second embodiment, which will not be repeated here.

In an embodiment, in addition to detecting multi-user uplink synchronization signals using the above technical solution, the present application may also adopt the following solutions to achieve the multi-user uplink synchronization signal detection effect:

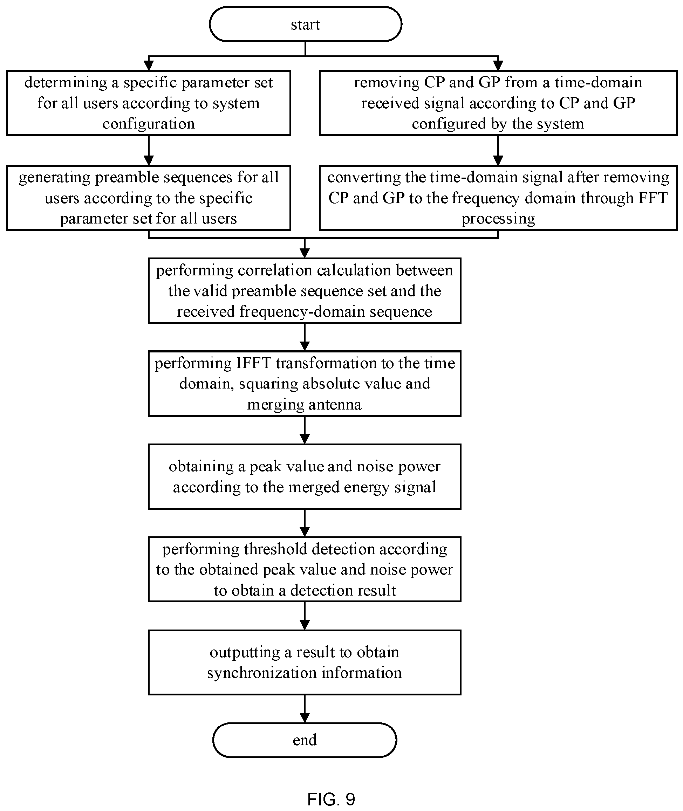

first detection scheme: no zero-padding in the frequency domain and no interference cancellation step is performed, the flowchart of which is shown in FIG. 9. This scheme supports the minimum number of users.

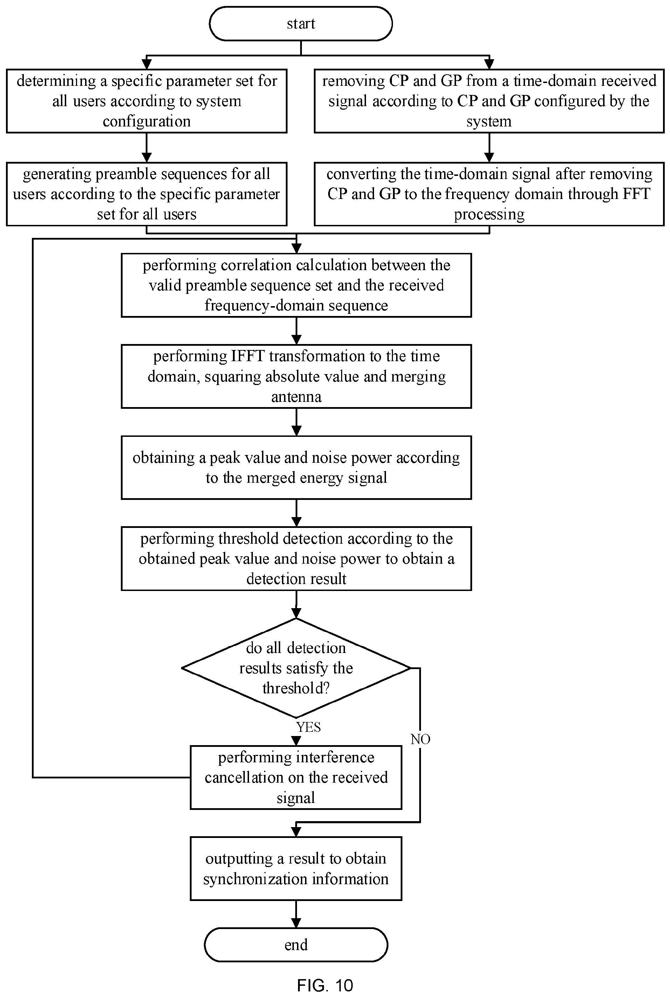

Second detection scheme: no zero-padding in the frequency domain and the interference cancellation step is performed, the flowchart of which is shown in FIG. 10. This scheme supports more users than the first detection scheme.

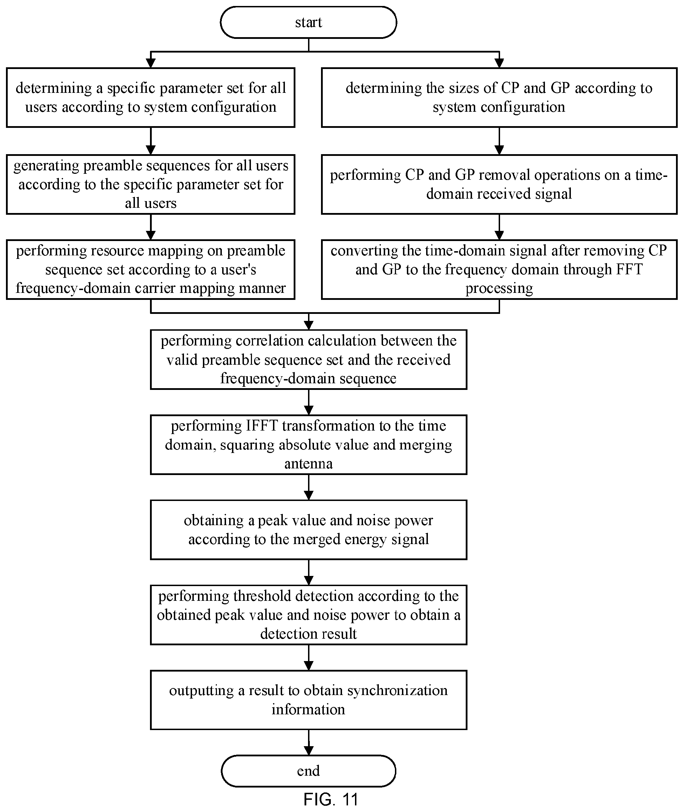

Third detection scheme: performing comb frequency division processing for multi-users only through zero-padding in the frequency domain and no interference cancellation step is performed, the flowchart of which is shown in FIG. 11. This scheme supports more users than the second detection scheme.

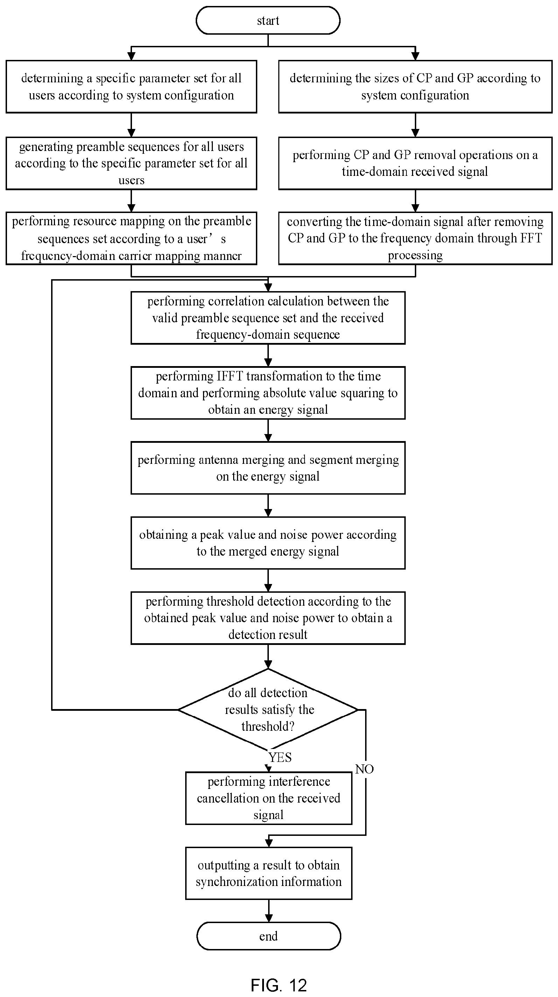

Fourth detection scheme: performing comb frequency division processing for multi-users only through zero-padding in the frequency domain and the interference cancellation step is performed, the flowchart of which is shown in FIG. 12. This scheme supports more users than the third detection scheme.

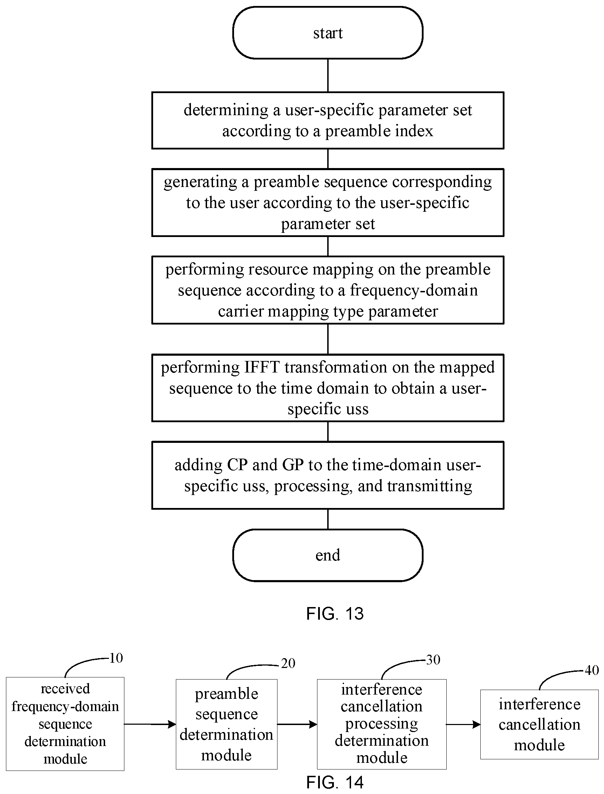

Referring to FIG. 13, in the fifth embodiment of the present application, the multi-user uplink synchronization signal processing method of the present application is applied to the transmitting end, where the transmitting end can be a mobile device with wireless communication (mobile phone, computer, small PLC, mobile cart, sensor device, etc.). The multi-user uplink synchronization signal processing method of the present application includes the following steps:

step S310: determining a preamble sequence corresponding to the transmitting end.

In this embodiment, a preamble sequence index sent by the management station is received, and a specific parameter set is determined according to the preamble sequence index. A preamble sequence corresponding to the transmitting end is generated according to the specific parameter set.

In an embodiment, when a start signal of the transmitting end is detected, the preamble sequence index sent by the management station is received, and the specific parameter set corresponding to the transmitting end is determined according to the preamble sequence index and the mapping relationship between the preamble sequence index and the specific parameter set.

In an embodiment, the specific parameter set at least includes a frequency-domain carrier mapping type and a complete feature set for generating a preamble sequence. The complete feature set for generating a preamble sequence includes a preamble sequence root value, cyclic shift, and preamble sequence length. The preamble sequence corresponding to the transmitting end is generated according to the frequency-domain carrier mapping type, the preamble sequence root value, the cyclic shift and the preamble sequence length.

Step S320: determining a valid preamble sequence corresponding to the transmitting end based on the preamble sequence.

In an embodiment, frequency-domain carrier mapping is performed on the preamble sequence according to the frequency-domain carrier mapping type to obtain a valid preamble sequence corresponding to the transmitting end, where different frequency-domain carrier mapping types correspond to different frequency-domain zero-padding quantities, and the frequency-domain zero-padding quantity increases as the number of transmitting ends accessed by the management station increases.

Step S330: generating an uplink synchronization signal corresponding to the transmitting end based on the valid preamble sequence.

In this embodiment, an inverse fast Fourier transform is performed on the valid preamble sequence to obtain a time-domain sequence, cyclic shifting is performed on the time-domain sequence to obtain a cyclically shifted time-domain sequence; and a cyclic prefix and a guard period are added to the cyclically shifted time-domain sequence to obtain an uplink synchronization signal corresponding to the transmitting end.

Step S340: sending the uplink synchronization signal to a management station.

In this embodiment, the transmitting end can send uplink synchronization signals to the management station periodically.

For example, the steps executed by the transmitting end of the present application are as follows:

step 200: starting by the transmitting end.

Step 201: determining, by the transmitting end, a specific parameter set according to the preamble sequence index delivered by the management station. The method for determining the specific parameter set includes table lookup based on the preamble sequence index or generation through parameter configuration. The specific parameter set includes at least a user-specific frequency-domain carrier mapping type and a complete feature set for generating the preamble sequence (e.g., a ZC sequence requires a root value u for generating the preamble sequence, a user-specific cyclic shift Ncs, and a ZC sequence length Nzc; a pseudo-random sequence requires a corresponding generator polynomial, a user-specific cyclic shift Ncs, and a length for generating the pseudo-random sequence).

Step 202: generating a preamble sequence $X_{user}^{u}$ (the preamble sequence can be a ZC sequence or a pseudo-random sequence) according to the complete feature set of the preamble sequence in the specific parameter set obtained in step 201.

Step 203: after generating the user-specific preamble sequence according to step 202, performing frequency-domain subcarrier mapping on the preamble sequence $X_{user}^{u}$ according to the user-specific frequency-domain carrier mapping type.

The frequency-domain subcarrier mapping types are shown in FIG. 3. A user-specific frequency-domain resource mapping type parameter of 0 corresponds to Mapping Type 1, a parameter of 1 corresponds to Mapping Type 2, and a parameter of T corresponds to Mapping Type T+1. The more frequency-domain zero-paddings there are, the more users can be supported. The number of frequency-domain zero-paddings is determined by the number of users that need to be connected and synchronized as pre-configured in the management station, that is, the more users that need to be connected and synchronized, the more zero-paddings can be connected. The sequence $\widehat{X}_{user}^{u}$ after mapping has a length that is an integer power of 2, where virtual subcarriers are set to 0 and data subcarriers are set to values in the preamble sequence.

Step 204: performing an Inverse Fast Fourier Transform (IFFT) on the sequence $\widehat{X}_{user}^{u}$ after frequency-domain resource mapping to obtain a time-domain sequence, and performing user-specific cyclic shifting according to the user-specific cyclic shift Ncs to obtain a cyclically shifted time-domain sequence: $X_{user}^{u}$ .

Step 205: adding a cyclic prefix (CP) and a guard period (GP) to the cyclically shifted time-domain sequence $X_{user}^{u}$ obtained in step 204 to obtain the uplink synchronization signal (USS) corresponding to the transmitting end. The cyclic prefix and guard period are configured by the system, and the adding method of the cyclic prefix and guard period is shown in FIG. 2. Finally, wireless transmission is performed via a wireless antenna.

Step 205: completing, by the transmitting end, the USS transmission.

For example, assume that the physical channel has a bandwidth of 20 MHz and adopts IFFT with a specified IFFT length $N_{IFFT}$ = 256. The number of useful data subcarriers is $N_{Data}$ = 240, the number of guard subcarriers on each side is $N_{gp}$ = 8, and the number of DC subcarriers is $N_{NULL}$ = 3. The preamble sequence is a ZC sequence, and the complete feature set of the preamble sequence includes the ZC sequence root value u, user-specific cyclic shift Ncs=0, user-specific frequency-domain resource mapping type, and ZC sequence length Nzc=113. Meanwhile, the number of users performing uplink synchronization is Nu=8. The window size for threshold detection is Sw. The frequency-domain mapping type is 1 zero-padding. The steps are as follows:

step 1: starting by the user transmitting end.

Step 2: determining, by the user transmitting end, a specific parameter set according to the preamble sequence index delivered by the management station, and the parameter set is obtained locally by table lookup based on the preamble sequence index. The specific parameter set includes at least a frequency-domain carrier mapping mode, a ZC sequence root value u, a user-specific cyclic shift Ncs, and a ZC sequence length Nzc.

Step 3: generating a user-specific ZC sequence according to the parameters Nzc and root value u in the specific parameter set obtained in step 2, with the generation formula as follows:

$$X_{user}^{u}(n) = e^{-j\pi un(n+1)/Nzc}, u \in \{1,\ldots, Nzc-1\}, n = 0,1,\ldots, Nzc-1.$$

Step 4: performing frequency-domain subcarrier mapping on the specific ZC sequence generated in step 3 according to the user-specific frequency-domain carrier mapping mode. The frequency-domain subcarrier mapping modes are shown in FIG. 7. A user-specific frequency-domain resource mapping type parameter of 0 corresponds to Mapping Type 1, and a parameter of 1 corresponds to Mapping Type 2. The sequence $\widehat{X}_{user}^{u}$ after mapping has a length that is an integer power of 2, where virtual subcarriers are set to 0 and data subcarriers are set to values in the ZC sequence.

Step 5: performing IFFT on the sequence $\widehat{X}_{user}^{u}$ after frequency-domain resource mapping to obtain a time-domain sequence $x_{user}^{u}$.

$$\hat{x}_{user}^{u}(\hat{k}) = x_{user}^{u}(k), k = 0,1,\ldots, N_{IFFT}-1$$

where $\hat{k} = mod(k + Ncs, N_{IFFT})$, and $mod(\cdot)$ denotes the modulo operation.

Step 6: adding CP and GP to the cyclically shifted time-domain sequence $\hat{x}_{user}^{u}$ to obtain the uplink synchronization signal corresponding to the transmitting end. The CP is intercepted from the tail of $x_{user}^{u}$, and the GP is all zeros. Finally, wireless transmission is performed via a wireless antenna.

Step 7: completing, by the transmitting end, the transmission of the uplink synchronization signal.

In actual use, after being powered on, the transmitting end automatically monitors the preamble sequence index table. When a valid index identifier is detected in the preamble sequence index table, it is deemed that the management station allows the user terminal equipment to transmit access and synchronization signals. The access and synchronization information in the preamble sequence index table is determined according to the valid index identifier, or the access and synchronization information is generated through parameter configuration, and a unique access and synchronization signal is generated. The transmitting end only needs to perform frequency-domain mapping on the generated preamble sequence, perform IFFT after mapping, and finally add CP and GP for transmission.

Based on the above technical solution, this embodiment realizes uplink multi-user access and synchronization signal transmission by detecting the transmitting and receiving of the multiple access and synchronization preamble sequences under the same time-frequency resource of the management station. The multi-user transmission interference is reduced through the transmission design of the preamble sequence, so as to meet the performance requirements of more user access synchronization, lower latency, higher reliability and multi-access under the same time-frequency resource in industrial scenarios.

Embodiments of the present application provide examples of a multi-user uplink synchronization signal processing method. It should be noted that although logical sequences are shown in the flowcharts, in some cases, the steps shown or described may be performed in an order different from that here.

As shown in FIG. 14, the present application provides a multi-user uplink synchronization signal processing system, including:

a received frequency-domain sequence determination module 10, configured to receive uplink synchronization signals sent by each of the transmitting ends, and determine a received frequency-domain sequence based on the uplink synchronization signals;

a preamble sequence determination module 20, configured to determine a preamble sequence corresponding to each of the transmitting ends;

an interference cancellation processing determination module 30, configured to determine a detection result based on the preamble sequence and the received frequency-domain sequence, and determine whether the received frequency-domain sequence requires interference cancellation processing based on the detection result;

an interference cancellation module 40, configured to perform the interference cancellation processing on the received frequency-domain sequence in response to that the received frequency-domain sequence requires the interference cancellation processing based on the detection result.

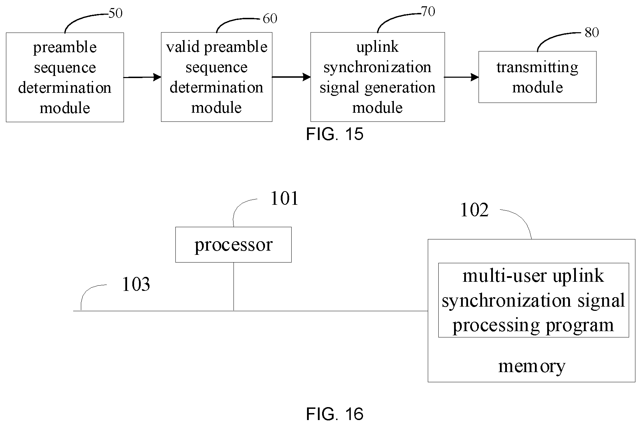

Alternatively, as shown in FIG. 15, the multi-user uplink synchronization signal processing system includes:

a preamble sequence determination module 50, configured to determine a preamble sequence corresponding to a transmitting end;

a valid preamble sequence determination module 60, configured to determine a valid preamble sequence corresponding to the transmitting end based on the preamble sequence and a frequency-domain carrier mapping type corresponding to the transmitting end;

an uplink synchronization signal generation module 70, configured to generate an uplink synchronization signal corresponding to the transmitting end based on the valid preamble sequence;

a transmitting module 80, configured to transmit the uplink synchronization signal. The specific implementation of the multi-user uplink synchronization signal processing system in this embodiment is basically the same as that of each embodiment of the multi-user uplink synchronization signal processing method, and will not be repeated here.

The specific implementation of the multi-user uplink synchronization signal processing system in this embodiment is basically the same as that of each embodiment of the aforementioned multi-user uplink synchronization signal processing method, and will not be repeated here.

In an embodiment, the hardware environment architecture involved in the multi-user uplink synchronization signal processing method can be shown in FIG. 16.

In an embodiment, the hardware architecture involved in the multi-user uplink synchronization signal processing method includes the management station or the transmitting end.

In an embodiment, the management station or the transmitting end includes: a processor 101, such as a CPU, a memory 102, and a communication bus 103. The communication bus 103 is used to realize the connection and communication between these components. The processor 101 is used to call an application program to execute control operations.

The memory 102 can be a high-speed RAM memory or a stable memory such as a magnetic disk memory.

It can be understood that, in an embodiment, the multi-user uplink synchronization signal processing program is stored in the memory 102 or in a computer-readable storage medium. When the processor 101 invokes the multi-user uplink synchronization signal processing program from the memory 102 or the computer-readable storage medium, it performs the following operations:

receiving uplink synchronization signals sent by each of transmitting ends, and determining a received frequency-domain sequence based on the uplink synchronization signals;

determining a preamble sequence corresponding to each of the transmitting ends;

determining a detection result based on the preamble sequence and the received frequency-domain sequence, and determining whether the received frequency-domain sequence requires interference cancellation processing based on the detection result;

in response to that the received frequency-domain sequence requires the interference cancellation processing based on the detection result, performing the interference cancellation processing on the received frequency-domain sequence.

In an embodiment, when the processor 101 invokes the multi-user uplink synchronization signal processing program from the memory 102 or the computer-readable storage medium, it performs the following operations:

determining a preamble sequence corresponding to the transmitting end;

determining a valid preamble sequence corresponding to the transmitting end based on the preamble sequence and a frequency-domain carrier mapping type corresponding to the transmitting end;

generating an uplink synchronization signal corresponding to the transmitting end based on the valid preamble sequence; and

sending the uplink synchronization signal to a management station.

Based on the same application concept, the embodiment of the present application further provides a computer-readable storage medium storing a multi-user uplink synchronization signal processing program. When executed by a processor, the multi-user uplink synchronization signal processing program implements the steps of the multi-user uplink synchronization signal processing method as described above and can achieve the same technical effects. To avoid repetition, details are not described herein again.

Since the storage medium provided in the embodiment of the present application is the one adopted for implementing the method of the embodiment of the present application, those skilled in the art can understand the specific structure and variations of the storage medium based on the method introduced in the embodiment of the present application, so details are not described herein again. All storage media adopted for the method of the embodiment of the present application fall within the scope of the present application.

It should be noted that in this article, the terms "include", "comprise" or any other variation thereof are intended to cover a non-exclusive inclusion, so that a process, method, article or system that includes a list of elements includes not only those elements, but also other elements not explicitly listed, or elements inherent to such a process, method, article or system. Without further restrictions, an element defined by the statement "includes a..." does not exclude the existence of other identical elements in the process, method, article or system that includes the element.

The serial numbers of the embodiments of the present application are for description purposes only and do not represent the merits of the embodiments.

From the above description of embodiments, those skilled in the art can clearly understand that the methods of the foregoing embodiments can be implemented by means of software plus a required general hardware platform, and of course can also be implemented by hardware, but the former is a better implementation in many cases. Based on such understanding, the technical solution of the present application, or the part that contributes to the prior art in essence, can be embodied in the form of a software product. The computer software product is stored in a storage medium as mentioned above (such as ROM/RAM, magnetic disk, optical disk) and includes several instructions to enable a terminal device (which may be a mobile phone, computer, server, television, network device, etc.) to execute the methods described in each embodiment of the present application.

The above are only optional embodiments of the present application, and do not limit the scope of the present application. Any equivalent structure or equivalent process transformation made through the contents of the specification and drawings of the present application, or directly or indirectly used in other related technical fields, is similarly included in the scope of the present application.

**Claims**

1. A multi-user uplink synchronization signal processing method, applied to a management station, **characterized by** comprising:

receiving uplink synchronization signals sent by each of transmitting ends, and determining a received frequency-domain sequence based on the uplink synchronization signals;
determining a preamble sequence corresponding to each of the transmitting ends;
determining a detection result based on the preamble sequence and the received frequency-domain sequence, and determining whether the received frequency-domain sequence requires interference cancellation processing based on the detection result; and
in response to that the received frequency-domain sequence requires the interference cancellation processing based on the detection result, performing the interference cancellation processing on the received frequency-domain sequence.

2. The multi-user uplink synchronization signal processing method according to claim 1, wherein the determining the detection result based on the preamble sequence and the received frequency-domain sequence, and determining whether the received frequency-domain sequence requires the interference cancellation processing based on the detection result comprises:

performing frequency-domain carrier mapping on the preamble sequence corresponding to each of the transmitting ends based on a frequency-domain carrier mapping type to obtain a valid preamble sequence set, determining the detection result based on the valid preamble sequence set and the received frequency-domain sequence, and determining whether the received frequency-domain sequence requires the interference cancellation processing based on the detection result, wherein the frequency-domain carrier mapping type comprises a zero-padding mode or a non-zero-padding mode; or

performing frequency-domain carrier demapping on the received frequency-domain sequence to obtain a received frequency-domain sequence after the frequency-domain carrier is demapped, determining a detection result based on the preamble sequence corresponding to each of the transmitting ends and the received frequency-domain sequence after the frequency-domain carrier is demapped, and determining whether the received frequency-domain sequence after the frequency-domain carrier is demapped requires the interference cancellation processing based on the detection result.

3. The multi-user uplink synchronization signal processing method according to claim 2, wherein the determining the detection result based on the valid preamble sequence set and the received frequency-domain sequence comprises:

determining an energy signal set based on the valid preamble sequence set and the received frequency-domain sequence;

performing time-domain merging on the energy signal set to obtain a merged energy signal set;

acquiring a signal peak value and a noise power in the merged energy signal set; and

performing threshold detection based on the signal peak value and the noise power to obtain the detection result.

4. The multi-user uplink synchronization signal processing method according to claim 3, wherein the determining the energy signal set based on the valid preamble sequence set and the received frequency-domain sequence comprises:

performing conjugate multiplication on the valid preamble sequence set and the received frequency-domain sequence to obtain a frequency-domain signal sequence;

performing an inverse Fourier transform on the frequency-domain signal sequence to obtain a time-domain signal sequence; and

calculating a square value after taking an absolute value of the time-domain signal sequence to obtain the energy signal set.

5. The multi-user uplink synchronization signal processing method according to claim 3, wherein the performing the threshold detection based on the signal peak value and the noise power to obtain the detection result comprises:

determining a detection threshold based on the noise power and a threshold constant;

in response to that the signal peak value is greater than the detection threshold, determining that the transmitting end is a first-detected transmitting end; and

in response to that the first-detected transmitting end meets a preset condition, determining that the detection result is that the first-detected transmitting end is a legitimate transmitting end; and

the determining whether the received frequency-domain sequence requires the interference cancellation processing based on the detection result comprises:

in response to that the detection result is that the first-detected transmitting end is the legitimate transmitting end, determining whether the received frequency-domain sequence requires the interference cancellation processing based on a current total number of transmitting ends.

6. The multi-user uplink synchronization signal processing method according to claim 5, wherein the preset condition comprises:

a signal-to-noise ratio corresponding to the first-detected transmitting end being greater than a preset signal-to-noise ratio; or

timing advance information corresponding to the first-detected transmitting end being less than a preset timing advance information threshold.

7. The multi-user uplink synchronization signal processing method according to claim 5, wherein the performing the interference cancellation processing on the received frequency-domain sequence comprises:

acquiring a unique identifier corresponding to the legitimate transmitting end;
determining a valid preamble sequence corresponding to the legitimate transmitting end based on the unique identifier;
acquiring a valid path channel coefficient and timing advance information corresponding to the legitimate transmitting end;
reconstructing the valid preamble sequence corresponding to the legitimate transmitting end based on the valid path channel coefficient and the timing advance information to obtain a reconstructed valid preamble sequence; and
performing interference cancellation on the received frequency-domain sequence through the reconstructed valid preamble sequence.

8. The multi-user uplink synchronization signal processing method according to claim 7, wherein the acquiring the valid path channel coefficient corresponding to the legitimate transmitting end comprises:

acquiring a time-domain auto-correlation peak value of the valid preamble sequence corresponding to the legitimate transmitting end, and a time-domain cross-correlation value between the valid preamble sequence corresponding to the legitimate transmitting end and the received frequency-domain sequence; and
determining the valid path channel coefficient corresponding to the legitimate transmitting end based on the time-domain auto-correlation peak value and the time-domain cross-correlation value.

9. The multi-user uplink synchronization signal processing method according to claim 2, wherein the determining the detection result based on the preamble sequence corresponding to each of the transmitting ends and the received frequency-domain sequence after the frequency-domain carrier is demapped comprises:

determining an energy signal set based on the preamble sequence corresponding to each of the transmitting ends and the received frequency-domain sequence after the frequency-domain carrier is demapped;
performing time-domain merging on the energy signal set to obtain a merged energy signal set;
acquiring a signal peak value and a noise power in the merged energy signal set; andperforming threshold detection based on the signal peak value and the noise power to obtain the detection result.

10. The multi-user uplink synchronization signal processing method according to claim 9, wherein the determining the energy signal set based on the preamble sequence corresponding to each of the transmitting ends and the received frequency-domain sequence after the frequency-domain carrier is demapped comprises:

performing conjugate multiplication on the preamble sequence corresponding to each of the transmitting ends and the received frequency-domain sequence after the frequency-domain carrier is demapped to obtain a frequency-domain signal sequence;
performing an inverse Fourier transform on the frequency-domain signal sequence to obtain a time-domain signal sequence; and
calculating a square value after taking an absolute value of the time-domain signal sequence to obtain the energy signal set.

11. The multi-user uplink synchronization signal processing method according to claim 3 or 9, wherein the performing the time-domain merging on the energy signal set to obtain the merged energy signal set comprises:

summing energy signals of each of antennas in the energy signal set to obtain an antenna merged energy signal set, or summing energy signals meeting a merging condition in the energy signal set to obtain an antenna merged energy signal set;
dividing the antenna merged energy signal set into energy signal sets with equal-length; and
summing corresponding energy signals in the energy signal sets with equal-length to obtain the merged energy signal set.

12. The multi-user uplink synchronization signal processing method according to claim 11, wherein the merging condition comprises that the signal-to-noise ratio is greater than a preset signal-to-noise ratio, or the energy signal set has a signal peak value.

13. The multi-user uplink synchronization signal processing method according to claim 3 or 9, wherein the acquiring the signal peak value and the noise power in the merged energy signal set comprises:

determining a signal peak value in the merged energy signal set;
acquiring residual energy signals in the merged energy signal set except the signal peak value and a preset number of signal points adjacent to the signal peak value; and
calculating an average signal energy based on each of the residual energy signals, and taking the average signal energy as the noise power.

14. The multi-user uplink synchronization signal processing method according to claim 1, further comprising:
after completing synchronization of uplink synchronization signals of all transmitting ends, outputting a synchronization information report.

15. The multi-user uplink synchronization signal processing method according to claim 1, wherein the determining the preamble sequence corresponding to each of the transmitting ends comprises:

determining a specific parameter set corresponding to each of the transmitting ends; and
generating a preamble sequence corresponding to each of the transmitting ends based on the specific parameter set.

16. The multi-user uplink synchronization signal processing method according to claim 15, wherein the determining the specific parameter set corresponding to each of the transmitting ends comprises:

determining the specific parameter set corresponding to each of the transmitting ends based on a preamble sequence index corresponding to each of the transmitting ends and a mapping relationship between the preamble sequence index of each of the transmitting ends and the specific parameter set, wherein the preamble sequence index corresponding to each of the transmitting ends is pre-configured by the management station; or configuring the specific parameter set corresponding to each of the transmitting ends through the management station.

17. The multi-user uplink synchronization signal processing method according to claim 15, wherein the specific parameter set comprises a complete feature set for generating a preamble sequence, and the generating the preamble sequence corresponding to each of the transmitting ends based on the specific parameter set comprises:
generating the preamble sequence corresponding to each of the transmitting ends based on the complete feature set corresponding to each of the transmitting ends.

18. The multi-user uplink synchronization signal processing method according to claim 1, wherein the determining the received frequency-domain sequence based on the uplink synchronization signal comprises:

determining a cyclic prefix and a guard period corresponding to each of the transmitting ends;
performing cyclic prefix removal processing on the uplink synchronization signal based on the cyclic prefix, and performing guard period removal processing on the uplink synchronization signal based on the guard period, to obtain a processed uplink synchronization signal corresponding to each of the transmitting ends; and
performing a fast Fourier transform on the uplink synchronization signal to obtain the received frequency-domain sequence.

19. A multi-user uplink synchronization signal processing method, applied to a transmitting end, **characterized by** comprising:

determining a preamble sequence corresponding to the transmitting end;
determining a valid preamble sequence corresponding to the transmitting end based on the preamble sequence and a frequency-domain carrier mapping type corresponding to the transmitting end;
generating an uplink synchronization signal corresponding to the transmitting end based on the valid preamble sequence; and
sending the uplink synchronization signal to a management station.

20. The multi-user uplink synchronization signal processing method according to claim 19, wherein the determining the preamble sequence corresponding to the transmitting end comprises:

receiving a preamble sequence index sent by the management station, and determining a specific parameter set based on the preamble sequence index; and
generating a preamble sequence corresponding to the transmitting end based on the specific parameter set.

21. The multi-user uplink synchronization signal processing method according to claim 20, wherein the receiving the preamble sequence index sent by the management station and determining the specific parameter set based on the preamble sequence index comprises:

in response to detecting a start signal of the transmitting end, receiving the preamble sequence index sent by the management station; and
determining the specific parameter set corresponding to the transmitting end based on the preamble sequence index and a mapping relationship between the preamble sequence index and the specific parameter set.

22. The multi-user uplink synchronization signal processing method according to claim 20, wherein the specific parameter set comprises a complete feature set for generating a preamble sequence, and the generating the preamble sequence corresponding to the transmitting end based on the specific parameter set comprises:
generating the preamble sequence corresponding to each of the transmitting ends based on the complete feature set corresponding to each of the transmitting ends.

23. The multi-user uplink synchronization signal processing method according to claim 19, wherein different frequency-domain carrier mapping types correspond to different zero-padding quantities, and the zero-padding quantity increases as a number of transmitting ends accessed by the management station increases.

24. The multi-user uplink synchronization signal processing method according to claim 19, wherein the generating the uplink synchronization signal corresponding to the transmitting end based on the valid preamble sequence comprises:

performing an inverse fast Fourier transform on the valid preamble sequence to obtain a time-domain sequence;
performing cyclic shifting on the time-domain sequence to obtain a cyclically shifted time-domain sequence; and
adding a cyclic prefix and a guard period to the cyclically shifted time-domain sequence to obtain the uplink synchronization signal corresponding to the transmitting end.

25. A multi-user uplink synchronization signal processing system, **characterized by** comprising:

a received frequency-domain sequence determination module, configured to receive uplink synchronization signals sent by each of the transmitting ends, and determine a received frequency-domain sequence based on the uplink synchronization signals;
a preamble sequence determination module, configured to determine a preamble sequence corresponding to each of the transmitting ends;
an interference cancellation processing determination module, configured to determine a detection result based on the preamble sequence and the received frequency-domain sequence, and determine whether the received frequency-domain sequence requires interference cancellation processing based on the detection result; and
an interference cancellation module, configured to perform the interference cancellation processing on the received frequency-domain sequence in response to that the received frequency-domain sequence requires the interference cancellation processing based on the detection result; or
the multi-user uplink synchronization signal processing system comprises:

a preamble sequence determination module, configured to determine a preamble sequence corresponding to a transmitting end;
a valid preamble sequence determination module, configured to determine a valid preamble sequence corresponding to the transmitting end based on the preamble sequence and a frequency-domain carrier mapping type corresponding to the transmitting end;
an uplink synchronization signal generation module, configured to generate an uplink synchronization signal corresponding to the transmitting end based on the valid preamble sequence; and
a transmitting module, configured to transmit the uplink synchronization signal.

26. A management station, **characterized by** comprising: a memory, a processor, and a multi-user uplink synchronization signal processing program stored on the memory and running on the processor, wherein the multi-user uplink synchronization signal processing program, when executed by the processor, implements the steps of the multi-user uplink synchronization signal processing method according to any one of claims 1 to 18.

27. A transmitting end, **characterized by** comprising: a memory, a processor, and a multi-user uplink synchronization signal processing program stored on the memory and running on the processor, wherein the multi-user uplink synchronization signal processing program, when executed by the processor, implements the steps of the multi-user uplink synchronization signal processing method according to any one of claims 19 to 24.

28. A computer-readable storage medium, **characterized by** storing a multi-user uplink synchronization signal processing program, wherein the multi-user uplink synchronization signal processing program, when executed by a processor, implements the steps of the multi-user uplink synchronization signal processing method according to any one of claims 1 to 24.

S110

receiving uplink synchronization signals sent by each of transmitting ends, and determining a received frequency-domain sequence based on the uplink synchronization signals

S120

determining a preamble sequence corresponding to each of the transmitting ends

S130

determining a detection result based on the preamble sequence and the received frequency-domain sequence, and determining whether the received frequency-domain sequence requires interference cancellation processing based on the detection result

S140

in response to that the received frequency-domain sequence requires the interference cancellation processing based on the detection result, performing the interference cancellation processing on the received frequency-domain sequence

FIG. 1

| CP | $\xleftarrow{\hspace{4cm}} x^{u}_{user} \xrightarrow{\hspace{4cm}}$ | GP |

FIG. 2

T zeros     T zeros        T zeros     T zeros

carrier mapping type 1

$-k\text{-}N_{gp}$   $-k$            2   0   1           $k$   $k\text{+}N_{gp}$

carrier mapping type 2

$-k\text{-}N_{gp}$   $-k$            2   0   1           $k$   $k\text{+}N_{gp}$

carrier mapping type T

$-k\text{-}N_{gp}$   $-k$            2   0   1           $k$   $k\text{+}N_{gp}$

carrier mapping type T+1

$-k\text{-}N_{gp}$   $-k$            2   0   1           $k$   $k\text{+}N_{gp}$

virtual subcarrier     data subcarrier

## FIG. 3

start

performing frequency-domain mapping on a locally generated ZC sequence to $N_{FFT}$ points

converting a received signal to the frequency domain via FFT to obtain $N_{FFT}$ points

performing corresponding conjugate multiplication on the $N_{FFT}$ points of the received sequence and the local sequence

obtaining a CORR of $N_{FFT}$ points in the frequency domain

end

## FIG. 4

FIG. 5

FIG. 6

FIG. 7

FIG. 8

```
                              ┌─────────────────┐
                              │      start       │
                              └─────────────────┘
                    │                                      │
                    ▼                                      ▼
    ┌──────────────────────────────┐    ┌──────────────────────────────────┐
    │ determining a specific       │    │ removing CP and GP from a         │
    │ parameter set for all users  │    │ time-domain received signal       │
    │ according to system          │    │ according to CP and GP            │
    │ configuration                │    │ configured by the system          │
    └──────────────────────────────┘    └──────────────────────────────────┘
                    │                                      │
                    ▼                                      ▼
    ┌──────────────────────────────┐    ┌──────────────────────────────────┐
    │ generating preamble          │    │ converting the time-domain signal │
    │ sequences for all users      │    │ after removing CP and GP to the    │
    │ according to the specific    │    │ frequency domain through FFT       │
    │ parameter set for all users  │    │ processing                         │
    └──────────────────────────────┘    └──────────────────────────────────┘
                    │                                      │
                    └──────────────────┬───────────────────┘
                                       ▼
                ┌──────────────────────────────────────────┐
                │ performing correlation calculation        │
                │ between the valid preamble sequence set   │
                │ and the received frequency-domain sequence│
                └──────────────────────────────────────────┘
                                       │
                                       ▼
                ┌──────────────────────────────────────────┐
                │ performing IFFT transformation to the     │
                │ time domain, squaring absolute value and  │
                │ merging antenna                           │
                └──────────────────────────────────────────┘
                                       │
                                       ▼
                ┌──────────────────────────────────────────┐
                │ obtaining a peak value and noise power    │
                │ according to the merged energy signal     │
                └──────────────────────────────────────────┘
                                       │
                                       ▼
                ┌──────────────────────────────────────────┐
                │ performing threshold detection according  │
                │ to the obtained peak value and noise power │
                │ to obtain a detection result              │
                └──────────────────────────────────────────┘
                                       │
                                       ▼
                ┌──────────────────────────────────────────┐
                │ outputting a result to obtain             │
                │ synchronization information               │
                └──────────────────────────────────────────┘
                                       │
                                       ▼
                              ┌─────────────────┐
                              │      end         │
                              └─────────────────┘
```

FIG. 9

start

determining a specific parameter set for all users according to system configuration

removing CP and GP from a time-domain received signal according to CP and GP configured by the system

generating preamble sequences for all users according to the specific parameter set for all users

converting the time-domain signal after removing CP and GP to the frequency domain through FFT processing

performing correlation calculation between the valid preamble sequence set and the received frequency-domain sequence

performing IFFT transformation to the time domain, squaring absolute value and merging antenna

obtaining a peak value and noise power according to the merged energy signal

performing threshold detection according to the obtained peak value and noise power to obtain a detection result

do all detection results satisfy the threshold?

YES

NO

performing interference cancellation on the received signal

outputting a result to obtain synchronization information

end

FIG. 10

start

| determining a specific parameter set for all users according to system configuration | determining the sizes of CP and GP according to system configuration |

| generating preamble sequences for all users according to the specific parameter set for all users | performing CP and GP removal operations on a time-domain received signal |

| performing resource mapping on preamble sequence set according to a user's frequency-domain carrier mapping manner | converting the time-domain signal after removing CP and GP to the frequency domain through FFT processing |

performing correlation calculation between the valid preamble sequence set and the received frequency-domain sequence

performing IFFT transformation to the time domain, squaring absolute value and merging antenna

obtaining a peak value and noise power according to the merged energy signal

performing threshold detection according to the obtained peak value and noise power to obtain a detection result

outputting a result to obtain synchronization information

end

FIG. 11

start

determining a specific parameter set for all users according to system configuration

determining the sizes of CP and GP according to system configuration

generating preamble sequences for all users according to the specific parameter set for all users

performing CP and GP removal operations on a time-domain received signal

performing resource mapping on the preamble sequences set according to a user's frequency-domain carrier mapping manner

converting the time-domain signal after removing CP and GP to the frequency domain through FFT processing

performing correlation calculation between the valid preamble sequence set and the received frequency-domain sequence

performing IFFT transformation to the time domain and performing absolute value squaring to obtain an energy signal

performing antenna merging and segment merging on the energy signal

obtaining a peak value and noise power according to the merged energy signal

performing threshold detection according to the obtained peak value and noise power to obtain a detection result

do all detection results satisfy the threshold?

YES

NO

performing interference cancellation on the received signal

outputting a result to obtain synchronization information

end

FIG. 12

```
              ┌─────────────────┐
              │      start       │
              └────────┬────────┘
                       │
    ┌──────────────────┴──────────────────┐
    │  determining a user-specific         │
    │  parameter set according to a        │
    │  preamble index                      │
    └──────────────────┬──────────────────┘
                       │
    ┌──────────────────┴──────────────────┐
    │  generating a preamble sequence      │
    │  corresponding to the user according │
    │  to the user-specific parameter set  │
    └──────────────────┬──────────────────┘
                       │
    ┌──────────────────┴──────────────────┐
    │  performing resource mapping on the  │
    │  preamble sequence according to a    │
    │  frequency-domain carrier mapping    │
    │  type parameter                      │
    └──────────────────┬──────────────────┘
                       │
    ┌──────────────────┴──────────────────┐
    │  performing IFFT transformation on   │
    │  the mapped sequence to the time     │
    │  domain to obtain a user-specific    │
    │  uss                                 │
    └──────────────────┬──────────────────┘
                       │
    ┌──────────────────┴──────────────────┐
    │  adding CP and GP to the time-domain │
    │  user-specific uss, processing, and  │
    │  transmitting                        │
    └──────────────────┬──────────────────┘
                       │
              ┌────────┴────────┐
              │       end        │
              └─────────────────┘
```

FIG. 13

```
  ┌──10           ┌──20           ┌──30              ┌──40
  ┌──────────┐   ┌──────────┐   ┌──────────────┐   ┌──────────┐
  │ received │   │ preamble │   │ interference │   │interference│
  │frequency-│   │ sequence │   │ cancellation │   │cancellation│
  │ domain   │→  │determina-│→  │  processing  │→  │  module   │
  │ sequence │   │  tion    │   │determination │   │          │
  │determina-│   │ module   │   │   module     │   │          │
  │tion module│  │          │   │              │   │          │
  └──────────┘   └──────────┘   └──────────────┘   └──────────┘
```

FIG. 14

preamble sequence determination module ~50

valid preamble sequence determination module ~60

uplink synchronization signal generation module ~70

transmitting module ~80

FIG. 15

processor 101

103

multi-user uplink synchronization signal processing program 102

memory

FIG. 16

## INTERNATIONAL SEARCH REPORT

| International application No. |
| --- |
| **PCT/CN2024/078641** |

| A. | CLASSIFICATION OF SUBJECT MATTER |
| --- | --- |

H04W56/00(2009.01)i

According to International Patent Classification (IPC) or to both national classification and IPC

| B. | FIELDS SEARCHED |
| --- | --- |

Minimum documentation searched (classification system followed by classification symbols)

IPC: H04L, H04W, H04Q

Documentation searched other than minimum documentation to the extent that such documents are included in the fields searched

Electronic data base consulted during the international search (name of data base and, where practicable, search terms used)

CNTXT, DWPI, ENTXTC, ENTXT, 3GPP, ETSI, IETF: 干扰, 频域, 前导, 消除, 相消, 上行, 同步, 能量, 阈值, interference cancellate, frequency-domain, pilot, preamble, uplink, synchronize, energy, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117460036 A (SHENZHEN INOVANCE TECHNOLOGY CO., LTD.) 26 January 2024 (2024-01-26) claims 1-28 | 1-28 |
| X | CN 112584538 A (HUAWEI TECHNOLOGIES CO., LTD.) 30 March 2021 (2021-03-30) description, paragraph 110 | 19-24, 27, 28 |
| A | CN 110798299 A (CHONGQING UNIVERSITY OF POSTS AND TELECOMMUNICATIONS) 14 February 2020 (2020-02-14) entire document | 1-28 |
| A | CN 104918336 A (ZTE CORP.) 16 September 2015 (2015-09-16) entire document | 1-28 |
| A | US 2017201397 A1 (ZTE CORP.) 13 July 2017 (2017-07-13) entire document | 1-28 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 April 2024** | **09 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" align="center">**INTERNATIONAL SEARCH REPORT**<br>**Information on patent family members**</td><td colspan="2">International application No.<br><br>**PCT/CN2024/078641**</td></tr>
<tr><td colspan="2" align="center">Patent document<br>cited in search report</td><td align="center">Publication date<br>(day/month/year)</td><td align="center">Patent family member(s)</td><td align="center">Publication date<br>(day/month/year)</td></tr>
<tr><td>CN</td><td>117460036 A</td><td>26 January 2024</td><td>None</td><td></td></tr>
<tr><td>CN</td><td>112584538 A</td><td>30 March 2021</td><td>None</td><td></td></tr>
<tr><td>CN</td><td>110798299 A</td><td>14 February 2020</td><td>None</td><td></td></tr>
<tr><td>CN</td><td>104918336 A</td><td>16 September 2015</td><td>WO 2015135295 A1</td><td>17 September 2015</td></tr>
<tr><td></td><td></td><td></td><td>US 2017019929 A1</td><td>19 January 2017</td></tr>
<tr><td></td><td></td><td></td><td>EP 3104657 A1</td><td>14 December 2016</td></tr>
<tr><td></td><td></td><td></td><td>EP 3104657 A4</td><td>08 March 2017</td></tr>
<tr><td></td><td></td><td></td><td>EP 3104657 B1</td><td>05 December 2018</td></tr>
<tr><td>US</td><td>2017201397 A1</td><td>13 July 2017</td><td>EP 3160207 A1</td><td>26 April 2017</td></tr>
<tr><td></td><td></td><td></td><td>EP 3160207 A4</td><td>26 July 2017</td></tr>
<tr><td></td><td></td><td></td><td>EP 3160207 B1</td><td>20 November 2019</td></tr>
<tr><td></td><td></td><td></td><td>WO 2015192474 A1</td><td>23 December 2015</td></tr>
<tr><td></td><td></td><td></td><td>JP 2017525229 A</td><td>31 August 2017</td></tr>
<tr><td></td><td></td><td></td><td>JP 6437577 B2</td><td>12 December 2018</td></tr>
<tr><td></td><td></td><td></td><td>US 10033559 B2</td><td>24 July 2018</td></tr>
</table>

Form PCT/ISA/210 (patent family annex) (July 2022)

**EP 4 787 985 A1**

**Patent documents cited in the description**

- CN 202311392326